(19) Europäisches Patentamt
European Patent Office
Office européen des brevets

(11) **EP 4 303 790 A1**

(12) **EUROPÄISCHE PATENTANMELDUNG**

(43) Veröffentlichungstag:
**10.01.2024  Patentblatt 2024/02**

(21) Anmeldenummer: **22207143.3**

(22) Anmeldetag: **14.11.2022**

(51) Internationale Patentklassifikation (IPC):
***G06Q 10/06*** *(2023.01)*

(52) Gemeinsame Patentklassifikation (CPC):
**G06Q 10/06;** Y02E 10/20

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **07.07.2022  CN 202210794679**

(71) Anmelder:
• China Three Gorges Co., Ltd.
  **Wuhan Hubei 430010 (CN)**
• China Three Gorges University
  **Yichang City, Hubei 443002 (CN)**

(72) Erfinder:
• JIANG, Dingguo
  **Wuhan, 430010 (CN)**

• LIU, Wei
  **Wuhan, 430010 (CN)**
• ZHAI, Yanwei
  **Wuhan, 430010 (CN)**
• DAI, Huichao
  **Wuhan, 430010 (CN)**
• ZHAO, Hanqing
  **Wuhan, 430010 (CN)**
• ZHAI, Ran
  **Wuhan, 430010 (CN)**
• ZOU, Peng
  **Wuhan, 430010 (CN)**

(74) Vertreter: **Frick, Robert
Lorenz Seidler Gossel
Rechtsanwälte Patentanwälte
Partnerschaft mbB
Widenmayerstraße 23
80538 München (DE)**

(54) **VERFAHREN, VORRICHTUNG, AUSRÜSTUNG UND MEDIUM ZUM UNTERTEILEN DER HYDRODYNAMISCHEN EIGENSCHAFTEN EINES RESERVOIRS**

(57)    Die vorliegende Erfindung stellt ein Verfahren, eine Vorrichtung, eine Ausrüstung und ein Medium zum Unterteilen der hydrodynamischen Eigenschaften eines Reservoirs bereit, wobei das Verfahren zum Unterteilen der hydrodynamischen Eigenschaften eines Reservoirs die folgenden Schritte umfasst: Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen; Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten; Bestimmen eines Bereichstyps, der jedem hydrodynamischen Merkmalsbereich entspricht, basierend auf räumlichen Positionsinformationen einer Vielzahl von Schnittebenen, die in jedem hydrodynamischen Merkmalsbereich enthalten sind. Die vorliegende Erfindung kann eine automatische Unterteilung des Kanals entlang eines Fließweges des Reservoirs realisieren und beruht nicht auf empirischen Parametern, die objektiver und stabiler sind, wodurch technische Unterstützung für den tatsächlichen Betrieb und die Planung des Reservoirs bereitgestellt werden kann.

Figur 1

**Beschreibung**

Gebiet der Erfindung

Die vorliegende Erfindung bezieht sich auf das technische Gebiet der Wasserbautechnik, insbesondere auf ein Verfahren, eine Vorrichtung, eine Ausrüstung und ein Medium zum Unterteilen der hydrodynamischen Eigenschaften eines Reservoirs.

Stand der Technik

Ein Kanalreservoir bezieht sich auf ein künstliches Reservoir, das durch Staudämme am Kanal gebildet wird und verschiedene Funktionen wie Hochwasserschutz, Stromerzeugung, Bewässerung und Schifffahrt hat. Die Grenze zwischen dem Kanalbereich und dem Seebereich eines Kanalreservoirs ändert sich mit den Betriebsbedingungen des Reservoirs. Daher spielt die genaue Identifizierung der dynamischen Grenze zwischen dem Kanalbereich und dem Seebereich eines Kanalreservoirs eine wichtige Rolle für die reibungslose Planung und den sicheren Betrieb des Reservoirs.

In den vorhandenen verwandten Technologien hängt die Definition der Grenze zwischen dem Kanalbereich und dem Seebereich eines Kanalreservoirs von empirischen Parametern ab, so dass die erhaltenen Unterteilungsergebnisse stark von der menschlichen Subjektivität beeinflusst werden. Basierend auf dem Wasserstand vor dem Damm wird die erstarrte statische Grenze oder der Übergangsbereich qualitativ angegeben, indem die Beziehung zwischen dem Kanalgelände und dem Wasserstand vor dem Damm am Schnittebenenende des Kanalreservoirs verglichen wird, wodurch der Kanalbereich und der Seebereich des Kanalreservoirs unterschieden werden.

Die Unterteilung der Grenze zwischen dem Kanalreservoir und dem Seebereich auf diese Weise kann jedoch leicht vom tatsächlichen Betrieb des Kanalreservoirs abweichen. Und die Unterteilungsergebnisse haben einen großen Schwankungsbereich bei der Änderung der empirischen Parameter, was den tatsächlichen Anforderungen einer verfeinerten Planung nur schwer gerecht wird.

Aufgabe der Erfindung

Daher besteht das durch die vorliegende Erfindung zu lösende technische Problem darin, ein Verfahren, eine Vorrichtung, eine Ausrüstung und ein Medium zum Unterteilen der hydrodynamischen Eigenschaften eines Reservoirs bereitzustellen, wodurch die Mängel an Objektivität und Stabilität der Unterteilung der hydrodynamischen Eigenschaften des Kanalreservoirs im Stand der Technik überwunden werden.

Gemäß einem ersten Aspekt stellt die vorliegende Erfindung ein Verfahren zum Unterteilen der hydrodynamischen Eigenschaften eines Reservoirs bereit, dass das Verfahren die folgenden Schritte umfasst: Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten, wobei jeder Satz von Wasseroberflächenliniendaten entlang eines Fließweges Wasserstandsdaten umfasst, die der ersten Anzahl von Schnittebenen zu dem gleichen Zeitpunkt entsprechen,

Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten, wobei jeder hydrodynamische Merkmalsbereich eine Vielzahl von Schnittebenen umfasst,

Bestimmen eines räumlichen Positionsbereichs jedes hydrodynamischen Merkmalsbereichs basierend auf räumlichen Positionsinformationen einer Vielzahl von Schnittebenen, die in jedem hydrodynamischen Merkmalsbereich enthalten sind,

Bestimmen eines Bereichstyps, der jedem hydrodynamischen Merkmalsbereich entspricht, basierend auf dem räumlichen Positionsbereich jedes hydrodynamischen Merkmalsbereichs. Bei diesem Verfahren wird der Kanal entlang eines Fließweges durch Gruppieren in eine zweite Anzahl von hydrodynamischen Merkmalsbereichen basierend auf den Wasserstandsdaten der ersten Anzahl von Schnittebenen innerhalb des Reservoirbereichs des Reservoirs zu verschiedenen Zeitpunkten unter den spezifizierten hydrologischen Bedingungen unterteilt, um jeden hydrodynamischen Merkmalsbereich zu klären, so dass eine automatische Unterteilung des Kanals entlang eines Fließweges des Reservoirs realisieren kann und nicht auf empirischen Parametern beruht, die objektiver und stabiler sind, wodurch technische Unterstützung für den tatsächlichen Betrieb und die Planung des Reservoirs bereitgestellt werden kann.

In Kombination mit dem ersten Aspekt ist in dem ersten Ausführungsbeispiel des ersten Aspekts vorgesehen, dass das Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten, umfassend: Erfassen eines gaußschen Mischmodells, das aus einer zweiten Anzahl von gaußschen Verteilungsmodellen besteht, wobei verschiedene gaußsche Verteilungsmodelle verwendet werden, um verschiedene hydrodynamische Merkmalsbereiche zu bestimmen,

Gruppieren der ersten Anzahl von Schnittebenen durch das gaußsche Mischmodell basierend auf Wasserstandsdaten jeder Schnittebene zu verschiedenen Zeitpunkten innerhalb eines spezifizierten Zeitintervalls, um die zweite Anzahl von hydrodynamischen Merkmalsbereichen zu erhalten.

Bei diesem Verfahren wird jede Schnittebene basierend auf der Änderung des Wasserstands jeder Schnittebene zu verschiedenen Zeitpunkten gruppiert. Dies hilft, die subjektive Interferenz der künstlichen Unterteilung zu vermeiden, so dass die erhaltenen Unterteilungsergebnisse für die hydrologischen Bedingungen des Kanals entlang eines Fließweges des Reservoirs hilfreicher sind, wodurch die Vorhersageergebnisse des erhaltenen hydrodynamischen Merkmalsbereichs objektiver und vernünftiger werden.

In Kombination mit dem ersten Ausführungsbeispiel des ersten Aspekts ist in dem zweiten Ausführungsbeispiel des ersten Aspekts vorgesehen, dass das Gruppieren der ersten Anzahl von Schnittebenen durch das gaußsche Mischmodell basierend auf Wasserstandsdaten jeder Schnittebene zu verschiedenen Zeitpunken innerhalb eines spezifizierten Zeitintervalls, um die zweite Anzahl von hydrodynamischen Merkmalsbereichen zu erhalten, umfassend: Auswählen eines der gaußschen Verteilungsmodelle in der zweiten Anzahl von gaußschen Verteilungsmodellen eins nach dem anderen als gaußsches Zielverteilungsmodell, Berechnen der gaußschen Verteilungswahrscheinlichkeit jeder Schnittebene durch das gaußsche Zielverteilungsmodell basierend auf Wasserstandsdaten jeder Schnittebene zu verschiedenen Zeitpunken innerhalb eines spezifizierten Zeitintervalls, um die gaußsche Verteilung der ersten Anzahl von Schnittebenen unter dem gaußschen Zielverteilungsmodell zu bestimmen,

Bestimmen einer Vielzahl von Zielschnittebenen in der ersten Anzahl von Schnittebenen, die in den hydrodynamischen Zielmerkmalsbereich aggregiert werden sollen, basierend auf der gaußschen Verteilung, dass der hydrodynamische Zielmerkmalsbereich ein dynamischer Merkmalsbereich ist, der dem gaußschen Zielverteilungsmodell entspricht,

Aggregatieren der Vielzahl von ZielSchnittebenen in den hydrodynamischen Zielmerkmalsbereich, um den hydrodynamischen Zielmerkmalsbereich zu erhalten.

In Kombination mit dem ersten Aspekt ist in dem dritten Ausführungsbeispiel des ersten Aspekts vorgesehen, dass das Verfahren auch die folgenden Schritte umfasst: Markieren jeder Schnittebene gemäß dem hydrodynamischen Merkmalsbereich, zu dem jede Schnittebene gehört,

Erhalten und Ausgeben einer Verteilungskarte des hydrodynamischen Merkmalsbereichs des Reservoirs basierend auf der räumlichen Positionsinformation jeder Schnittebene und der entsprechenden Markierung.

In Kombination mit dem dritten Ausführungsbeispiel des ersten Aspekts ist in dem vierten Ausführungsbeispiel des ersten Aspekts vorgesehen, dass das Markieren jeder Schnittebene gemäß dem hydrodynamischen Merkmalsbereich, zu dem jede Schnittebene gehört, umfassend:
Erfassen der ersten Wasseroberflächenliniendaten entlang eines Fließweges und der zweiten Wasseroberflächenliniendaten entlang eines Fließweges von den mehreren Sätzen von Wasseroberflächenliniendaten entlang eines Fließweges gemäß des Lesezeitpunktes jedes Satzes von Wasseroberflächenliniendaten entlang eines Fließweges, wobei die ersten Wasseroberflächenliniendaten entlang eines Fließweges Wasseroberflächenliniendaten entlang eines Fließweges entlang eines Fließweges mit dem frühesten Lesezeitpunkt in den mehreren Sätzen von Wasseroberflächenliniendaten entlang eines Fließweges sind und die zweiten Wasseroberflächenliniendaten entlang eines Fließweges Wasseroberflächenliniendaten entlang eines Fließweges mit dem spätesten Lesezeitpunkt in den mehreren Sätzen von Wasseroberflächenliniendaten entlang eines Fließweges sind, Markieren jeder Schnittebene in den ersten Wasseroberflächenliniendaten entlang eines Fließweges und Markieren jeder Schnittebene in den zweiten Wasseroberflächenliniendaten entlang eines Fließweges gemäß dem hydrodynamischen Merkmalsbereich, zu dem jeder Schnittebene gehört.

In Kombination mit dem ersten Aspekt ist in dem fünften Ausführungsbeispiel des ersten Aspekts vorgesehen, dass das Verfahren auch die folgenden Schritte umfasst:
Auswählen einer der hydrologischen Bedingungen aus einer dritten Anzahl von hydrologischen Bedingungen als die spezifizierte hydrologische Bedingung, wobei die hydrologische Bedingung mindestens einen spezifizierten Wasserstand vor dem Damm und spezifizierte Zuflussdaten umfasst.

In Kombination mit dem fünften Ausführungsbeispiel des ersten Aspekts ist in dem sechsten Ausführungsbeispiel des ersten Aspekts vorgesehen, dass das Verfahren auch die folgenden Schritte umfasst:

Bestimmen einer Änderung des räumlichen Positionsbereichs des hydrodynamischen Zielmerkmalsbereichs unter jeder dritten Anzahl von hydrodynamischen Bedingungen gemäß dem räumlichen Positionsbereich des hydrodynamischen Zielmerkmalsbereichs unter jeder der dritten Anzahl von hydrologischen Bedingungen,
Einstellen eines räumlichen Positionsbereichs des hydrodynamischen Zielmerkmalsbereichs in dem Kanal des Reservoirs entlang eines Fließweges gemäß einer Änderung des räumlichen Positionsbereichs.

In Kombination mit dem ersten Aspekt ist in dem siebten Ausführungsbeispiel des ersten Aspekts vorgesehen, dass der Bereichstyp mindestens einen der Kanalbereiche, Übergangsbereiche und Seebereiche umfasst.

Gemäß einem zweiten Aspekt stellt die vorliegende Erfindung auch eine Vorrichtung zum Unterteilen der hydrodynamischen Eigenschaften eines Reservoirs bereit, dass die Vorrichtung die folgenden Komponenten umfasst:

eine Leseeinheit zum Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten, wobei jeder Satz von Wasseroberflächenliniendaten entlang eines Fließweges Wasserstandsdaten umfasst, die der ersten Anzahl von Schnittebenen zu dem gleichen Zeitpunkt entsprechen, eine Gruppierungseinheit zum Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten, wobei jeder hydrodynamische Merkmalsbereich eine Vielzahl von Schnittebenen umfasst,

eine erste Bestimmungseinheit zum Bestimmen eines räumlichen Positionsbereichs jedes hydrodynamischen Merkmalsbereichs gemäß räumlichen Positionsinformationen einer Vielzahl von Schnittebenen, die in jedem hydrodynamischen Merkmalsbereich enthalten sind, eine zweite Bestimmungseinheit zum Bestimmen eines Bereichstyps, der jedem hydrodynamischen Merkmalsbereich entspricht, gemäß dem räumlichen Positionsbereich jedes hydrodynamischen Merkmalsbereichs.

In Kombination mit dem zweiten Aspekt ist in dem ersten Ausführungsbeispiel des zweiten Aspekts vorgesehen, dass die Gruppierungseinheit die folgenden Komponenten umfasst:

Eine erste Erfassungseinheit zum Erfassen eines gaußschen Mischmodells, das aus einer zweiten Anzahl von gaußschen Verteilungsmodellen besteht, wobei verschiedene gaußsche Verteilungsmodelle verwendet werden, um verschiedene hydrodynamische Merkmalsbereiche zu bestimmen,

eine Gruppierungsuntereinheit zum Gruppieren der ersten Anzahl von Schnittebenen durch das gaußsche Mischmodell basierend auf Wasserstandsdaten jeder Schnittebene zu verschiedenen Zeitpunkten innerhalb eines spezifizierten Zeitintervalls, um die zweite Anzahl von hydrodynamischen Merkmalsbereichen zu erhalten.

In Kombination mit dem ersten Ausführungsbeispiel des zweiten Aspekts ist in dem zweiten Ausführungsbeispiel des zweiten Aspekts vorgesehen, dass die Gruppierungsuntereinheit die folgenden Komponenten umfasst:

eine Modellauswahleinheit zum Auswählen eines der gaußschen Verteilungsmodelle in der zweiten Anzahl von gaußschen Verteilungsmodellen eins nach dem anderen als gaußsches Zielverteilungsmodell,

eine dritte Bestimmungseinheit zum Berechnen der gaußschen Verteilungswahrscheinlichkeit jeder Schnittebene durch das gaußsche Zielverteilungsmodell basierend auf Wasserstandsdaten jeder Schnittebene zu verschiedenen Zeitpunkten innerhalb eines spezifizierten Zeitintervalls, um die gaußsche Verteilung der ersten Anzahl von Schnittebenen unter dem gaußschen Zielverteilungsmodell zu bestimmen,

eine vierte Bestimmungseinheit zum Bestimmen einer Vielzahl von Zielschnittebenen in der ersten Anzahl von Schnittebenen, die in den hydrodynamischen Zielmerkmalsbereich aggregiert werden sollen, basierend auf der gaußschen Verteilung, dass der hydrodynamische Zielmerkmalsbereich ein dynamischer Merkmalsbereich ist, der dem gaußschen Zielverteilungsmodell entspricht,

eine Aggregationseinheit zum Aggregatieren der Vielzahl von Zielschnittebenen in den hydrodynamischen Zielmerkmalsbereich, um den hydrodynamischen Zielmerkmalsbereich zu erhalten.

In Kombination mit dem zweiten Aspekt ist in dem dritten Ausführungsbeispiel des zweiten Aspekts vorgesehen, dass die Vorrichtung auch die folgenden Komponenten umfasst:

eine Markierungseinheit zum Markieren jeder Schnittebene gemäß dem hydrodynamischen Merkmalsbereich, zu dem jede Schnittebene gehört,

eine Ausgabeeinheit zum Erhalten und Ausgeben einer Verteilungskarte des hydrodynamischen Merkmalsbereichs des Reservoirs basierend auf der räumlichen Positionsinformation jeder Schnittebene und der entsprechenden Markierung.

In Kombination mit dem dritten Ausführungsbeispiel des zweiten Aspekts ist in dem vierten Ausführungsbeispiel des zweiten Aspekts vorgesehen, dass die Ausgabeeinheit die folgenden Komponenten umfasst:

eine zweite Erfassungseinheit zum Erfassen der ersten Wasseroberflächenliniendaten entlang eines Fließweges und der zweiten Wasseroberflächenliniendaten entlang eines Fließweges von den mehreren Sätzen von Wasseroberflächenliniendaten entlang eines Fließweges gemäß des Lesezeitpunktes jedes Satzes von Wasseroberflächenliniendaten entlang eines Fließweges,

wobei die ersten Wasseroberflächenliniendaten entlang eines Fließweges Wasseroberflächenliniendaten entlang eines Fließweges mit dem frühesten Lesezeitpunkt in den mehreren Sätzen von Wasseroberflächenliniendaten entlang eines Fließweges sind und

die zweiten Wasseroberflächenliniendaten entlang eines Fließweges Wasseroberflächenliniendaten entlang eines Fließweges mit dem spätesten Lesezeitpunkt in den mehreren Sätzen von Wasseroberflächenliniendaten entlang eines Fließweges sind,

eine Ausgabeuntereinheit zum Markieren jeder Schnittebene in den ersten Wasseroberflächenliniendaten entlang eines Fließweges und Markieren jeder Schnittebene in den zweiten Wasseroberflächenliniendaten entlang eines Fließweges gemäß dem hydrodynamischen Merkmalsbereich, zu dem jede Schnittebene gehört.

In Kombination mit dem zweiten Aspekt ist in dem fünften Ausführungsbeispiel des zweiten Aspekts vorgesehen, dass die Vorrichtung auch die folgenden Komponenten umfasst: eine Bedingungsfiltereinheit zum Auswählen einer der hydrologischen Bedingungen aus einer dritten Anzahl von hydrologischen Bedingungen als die spezifizierte hydrologische Bedingung, wobei die hydrologische Bedingung mindestens einen spezifizierten Wasserstand vor dem Damm und spezifizierte Zuflussdaten umfasst.

In Kombination mit dem fünften Ausführungsbeispiel des zweiten Aspekts ist in dem sechsten Ausführungsbeispiel des zweiten Aspekts vorgesehen, dass die Vorrichtung auch die folgenden Komponenten umfasst:

eine fünfte Bestimmungseinheit zum Bestimmen einer Änderung des räumlichen Positionsbereichs des hydrodynamischen Zielmerkmalsbereichs unter jeder dritten Anzahl von hydrodynamischen Bedingungen gemäß dem räumlichen Positionsbereich des hydrodynamischen Zielmerkmalsbereichs unter jeder der dritten Anzahl von hydrologischen Bedingungen,

eine Einstelleinheit zum Einstellen eines räumlichen Positionsbereichs des hydrodynamischen Zielmerkmalsbereichs in dem Kanal entlang eines Fließweges des Reservoirs gemäß einer Änderung des räumlichen Positionsbereichs.

In Kombination mit dem zweiten Aspekt ist in dem siebten Ausführungsbeispiel des zweiten Aspekts vorgesehen, dass der Bereichstyp mindestens einen der Kanalbereiche, Übergangsbereiche und Seebereiche umfasst.

Gemäß einem dritten Aspekt stellt die Ausführungsform der vorliegenden Erfindung auch eine Computerausrüstung bereit, umfassend einen Speicher und einen Prozessor, dass der Speicher und der Prozessor in Kommunikation miteinander verbunden sind, dass Computerbefehle in dem Speicher gespeichert sind, dass der Prozessor den Computerbefehl ausführt, wodurch ein Verfahren zum Unterteilen der hydrodynamischen Eigenschaften eines Reservoirs nach dem ersten Aspekt und einer der optionalen Ausführungsformen ausgeführt wird.

Gemäß einem vierten Aspekt stellt die Ausführungsform der vorliegenden Erfindung auch ein computerlesbares Speichermedium bereit, dass Computerbefehle auf dem computerlesbaren Speichermedium gespeichert sind, dass der Computerbefehl verwendet wird, um zu ermöglichen, dass der Computer ein Verfahren zum Unterteilen der hydrodynamischen Eigenschaften eines Reservoirs nach dem ersten Aspekt und einer der optionalen Ausführungsformen ausführt.

Kurzbeschreibung der Zeichnungen

Um die spezifischen Ausführungsformen der vorliegenden Erfindung oder die technischen Lösungen im Stand der Technik klarer zu beschreiben, werden die Zeichnungen, die in den spezifischen Ausführungsformen oder der Beschreibung des Standes der Technik zu verwenden sind, nachstehend kurz beschrieben. Offensichtlich sind die Zeichnungen in der folgenden Beschreibung einige Ausführungsformen der vorliegenden Erfindung. Der gewöhnliche Fachmann kann auch andere Zeichnungen auf der Grundlage dieser Zeichnungen erhalten, ohne kreative Arbeit zu leisten.

Fig. 1 ist ein Flussdiagramm eines Verfahrens zum Unterteilen der hydrodynamischen Eigenschaften eines Reservoirs gemäß einem beispielhaften Ausführungsbeispiel.

Fig. 2 ist ein schematisches Diagramm einer Wasseroberflächenlinie entlang eines Fließweges gemäß einem beispielhaften Ausführungsbeispiel.

Fig. 3 ist ein schematisches Diagramm einer anderen Wasseroberflächenlinie entlang eines Fließweges gemäß einem beispielhaften Ausführungsbeispiel.

Fig. 4 ist ein schematisches Diagramm noch einer anderen Wasseroberflächenlinie entlang eines Fließweges gemäß einem beispielhaften Ausführungsbeispiel.

Fig. 5 ist ein schematisches Diagramm einer weiteren Wasseroberflächenlinie entlang eines Fließweges gemäß einem beispielhaften Ausführungsbeispiel.

Fig. 6 ist ein Flussdiagramm eines anderen Verfahrens zum Unterteilen der hydrodynamischen Eigenschaften eines Reservoirs gemäß einem beispielhaften Ausführungsbeispiel.

Fig. 7 ist ein schematisches Diagramm einer Verteilungskarte eines hydrodynamischen Merkmalsbereichs gemäß einem beispielhaften Ausführungsbeispiel.

Fig. 8 ist ein schematisches Diagramm einer Verteilungskarte eines hydrodynamischen Merkmalsbereichs gemäß einem beispielhaften Ausführungsbeispiel.

Fig. 9 ist ein schematisches Diagramm einer anderen Verteilungskarte eines hydrodynamischen Merkmalsbereichs gemäß einem beispielhaften Ausführungsbeispiel.

Fig. 10 ist ein schematisches Diagramm noch einer anderen Verteilungskarte eines hydrodynamischen Merkmalsbereichs gemäß einem beispielhaften Ausführungsbeispiel.

Fig. 11 ist ein Blockdiagramm einer Struktur einer Vorrichtung zum Unterteilen der hydrodynamischen Eigenschaften eines Reservoirs gemäß einem beispielhaften Ausführungsbeispiel.

Fig. 12 ist ein schematisches Diagramm einer Hardwarestruktur einer Computerausrüstung gemäß einem beispielhaften Ausführungsbeispiel.

## Beschreibung der bevorzugten Ausführungsbeispiele

Die technische Lösung der vorliegenden Erfindung wird im Folgenden in Verbindung mit den Zeichnungen klar und vollständig beschrieben. Offensichtlich sind die beschriebenen Ausführungsbeispiele einige Ausführungsbeispiele und nicht alle Ausführungsbeispiele der vorliegenden Erfindung. Auf der Grundlage der Ausführungsbeispiele in der vorliegenden Erfindung fallen alle anderen Ausführungsbeispiele, die der Fachmann ohne kreative Arbeit erhalten hat, in den Schutzbereich der vorliegenden Erfindung.

In verwandten Technologien basiert die Definition der Grenze zwischen dem Kanalbereich und dem Seebereich eines Kanalreservoirs hauptsächlich auf der Managementerfahrung des Betriebs und der Planung des Reservoirs. Basierend auf dem Wasserstand vor dem Damm wird die erstarrte statische Grenze oder der Übergangsbereich qualitativ angegeben, indem die Beziehung zwischen dem Kanalgelände und dem Wasserstand vor dem Damm am Schnittebenenende des Kanalreservoirs verglichen wird, wodurch der Kanalbereich und der Seebereich des Kanalreservoirs unterschieden werden.

Die Unterteilung der Grenze zwischen dem Kanalreservoir und dem Seebereich auf diese Weise kann jedoch leicht vom tatsächlichen Betrieb des Kanalreservoirs abweichen, was den tatsächlichen Anforderungen einer verfeinerten Planung nur schwer gerecht wird.

Um die obigen Probleme zu lösen, wird gemäß einem Ausführungsbeispiel der vorliegenden Erfindung ein Verfahren zum Unterteilen der hydrodynamischen Eigenschaften eines Reservoirs zur Verwendung in einer Computerausrüstung bereitgestellt. Es sei darauf hingewiesen, dass der Ausführungskörper eine Vorrichtung zum Unterteilen der hydrodynamischen Eigenschaften eines Reservoirs sein kann. Die Vorrichtung kann durch eine Kombination von Software, Hardware oder Software und Hardware zu einem Teil oder allen Teilen einer Computerausrüstung implementiert werden, wobei die Computerausrüstung ein Endgerät oder ein Client oder ein Server sein kann, wobei der Server ein Server oder ein Servercluster sein kann, der aus mehreren Servern besteht. Das Endgerät gemäß dem Ausführungsbeispiel der vorliegenden Erfindung kann ein Smartphone, ein PC, ein Tablet, ein tragbares Gerät und ein anderes intelligentes Hardwaregerät wie ein intelligenter Roboter sein. In einem Ausführungsbeispiel des folgenden Verfahrens wird der Ausführungskörper als ein Beispiel für eine Computerausrüstung beschrieben.

Die Computerausrüstung gemäß dem Ausführungsbeispiel wird verwendet, um das Nutzungsszenario der Grenze zwischen dem Kanalreservoir und dem Seebereich vorherzusagen. Verfahren zum Unterteilen der hydrodynamischen Eigenschaften eines Reservoirs gemäß der vorliegenden Erfindung, umfassend die folgenden Schritte: Aggregatieren der ersten Anzahl von Schnittebenen basierend auf Änderungen der Wasserstandsdaten der ersten Anzahl von Schnittebenen innerhalb des Reservoirbereichs des Reservoirs zu verschiedenen Zeitpunkten innerhalb des spezifizierten Zeitintervalls unter den spezifizierten hydrologischen Bedingungen; Unterteilen des Reservoirs in eine zweite Anzahl von hydrodynamischen Merkmalsbereichen; Bestimmen des Bereichstyps, der jedem hydrodynamischen Merkmalsbereich entspricht, basierend auf dem räumlichen Positionsbereich jedes hydrodynamischen Merkmalsbereichs, wodurch eine wichtige technische Unterstützung für die reibungslose Planung und den sicheren Betrieb des Reservoirs bereitgestellt wird.

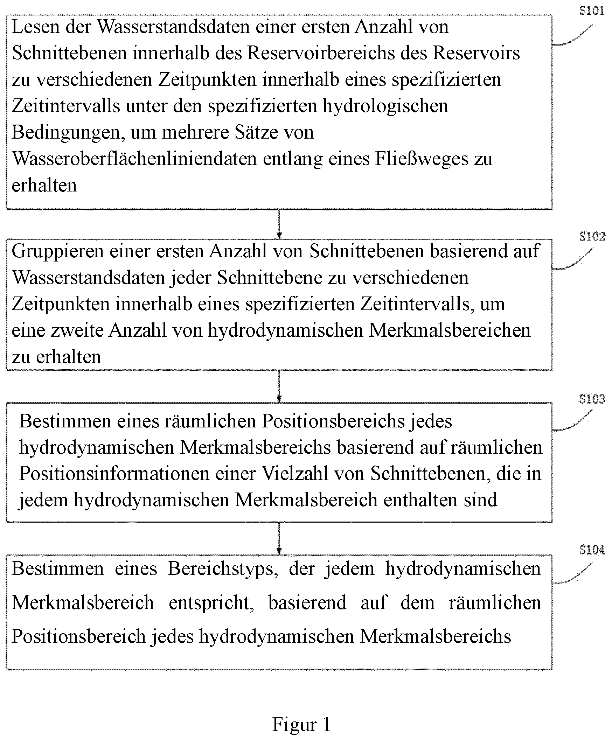

Fig. 1 ist ein Flussdiagramm eines Verfahrens zum Unterteilen der hydrodynamischen Eigenschaften eines Reservoirs gemäß einem beispielhaften Ausführungsbeispiel. Wie in Fig. 1 gezeigt, umfasst das Verfahren zum Unterteilen der hydrodynamischen Eigenschaften eines Reservoirs die folgenden Schritte S101 bis S104.

Schritt S101: Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten.

In einem Ausführungsbeispiel der vorliegenden Erfindung befindet sich das Reservoir in einem Hauptstrom in einem großen Fluss. Von stromaufwärts nach stromabwärts im Reservoirbereich nimmt die Wassertiefe allmählich zu und die Strömungsgeschwindigkeit verlangsamt sich allmählich, wodurch sich die Reibung der hydrodynamischen Eigenschaften allmählich ändert. Der Bereich mit der flachen Wassertiefe im Oberlauf ähnelt dem natürlichen Kanal, und der Bereich mit der größeren Wassertiefe vor dem Damm ähnelt dem eines Sees, und es handelt sich um einen Bereich mit einem allmählichen Übergang zwischen den beiden. Eine erste Anzahl von Schnittebenen ist innerhalb des Reservoirbereichs des Reservoirs enthalten. Die Schnittebene bezieht sich auf die Schnittebene des Kanals im Kanal senkrecht zur Richtung des Wasserflusses. Die erste Anzahl von Werten ist die Gesamtmenge, die basierend auf den Schnittebenenanforderungen ausgewählt wird.

Um die Änderung des Wasserstands jeder Schnittebene innerhalb des Reservoirbereichs unter den spezifizierten hydrologischen Bedingungen zu bestimmen, werden daher die Wasserstandsdaten der ersten Anzahl von Schnittebenen innerhalb des Reservoirbereichs zu verschiedenen Zeitpunkten innerhalb des spezifizierten Zeitintervalls getrennt gelesen, um mehrere Sätze von Wasseroberflächenliniendaten entlang eines Fließweges zu erhalten, wobei jeder Satz von Wasseroberflächenliniendaten entlang eines Fließweges Wasserstandsdaten umfasst, die einer ersten Anzahl von Schnittebenen zu der gleichen Zeit entsprechen. Die spezifizierte hydrologische Bedingung kann als eine Bedingung zum Lesen der Wasserstandsdaten der ersten Anzahl von Schnittebenen innerhalb des Reservoirbereichs des Reservoirs zu verschiedenen Zeitpunkten innerhalb des spezifizierten Zeitintervalls verstanden werden, die mindestens den spezifizierten Wasserstand vor dem Damm und die spezifizierten Zuflussdaten umfassen kann. In einem Beispiel kann das spezifizierte Zeitintervall ein Zeitintervall in Jahren sein. Zum Beispiel kann das spezifizierte Zeitintervall 2015-2021 sein.

In einem Beispiel kann die Simulationsberechnung durch ein vorkonstruiertes eindimensionales hydrodynamisches Modell durchgeführt werden, das für das Reservoir geeignet ist, und dann können die Wasserstandsdaten jeder Schnittebene gelesen werden. In einem anderen Beispiel können die spezifizierten hydrologischen Bedingungen basierend auf den hydrologischen und meteorologischen Daten des Reservoirs bestimmt werden. Zum Beispiel werden Daten wie topographische Schnittebenendaten des Reservoirs, des Zuflusses, des Wasserstands vor dem Damm usw. für ein spezifiziertes Zeitintervall gesammelt, um zu bestimmen, dass der Einstellbereich des Wasserstands vor dem Damm des Reservoirs einen normalen Wasserspeicherstand von 175 m, einen minimalen Wasserabfallstand von 145 m und einen Zuflussbereich von 5.000 m$^3$/s-50.000 m$^3$/s aufweist, wodurch die erforderlichen spezifizierten hydrologischen Bedingungen bestimmt werden.

In einem Ausführungsbeispiel kann eine dritte Anzahl von hydrologischen Bedingungen im Voraus eingestellt werden, um eine der hydrologischen Bedingungen als spezifizierte hydrologische Bedingungen auszuwählen. Die Zuflussdaten können feste Zuflussdaten oder Zeitreihen des Zuflusses sein, wobei die spezifizierte hydrologische Bedingung auch Attributinformationen des Zuflusses oder Attributinformationen des Wasserstands vor dem Damm umfassen kann. Die Attributinformation des Zuflusses kann den Änderungszustand, die Änderungsperiode, die Flussamplitude und die Dauer des Zuflusses umfassen. Die Attributinformation des Wasserstands vor dem Damm kann den Änderungszustand, die

Änderungsperiode, die Amplitude und die Dauer des Wasserstands vor dem Damm umfassen. Da sich der Wasserstand, der derselben Schnittebene entspricht, zu verschiedenen Zeitpunkten unter verschiedenen spezifizierten hydrologischen Bedingungen ändern kann. Daher können die zu verschiedenen Zeitpunkten gelesenen Wasserstandsdaten der Schnittebene eine Vielzahl von Wasserstandsdaten sein, die jeweils verwendet werden, um die Wasserstandsdaten darzustellen, die der Schnittebene zu verschiedenen Zeitpunkten entsprechen. Daher können unter den spezifizierten hydrologischen Bedingungen gemäß der Wasserstandshöhe, die jeder Schnittebene zu verschiedenen Zeitpunkten entspricht, mehrere Sätze von Wasseroberflächenliniendaten entlang eines Fließweges durch numerische Simulation erhalten werden.

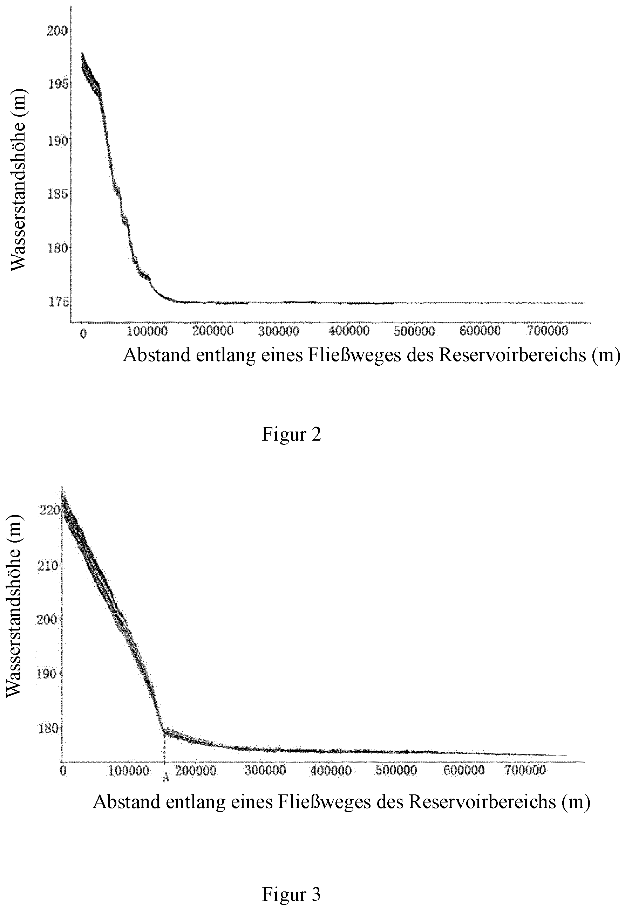

Wie in Fig. 2 gezeigt, entspricht die Schnittebene unter dem Abstand entlang eines Fließweges desselben Reservoirbereichs unter den spezifizierten hydrologischen Bedingungen einer Vielzahl von Wasserstandsdaten. Dabei in Fig. 2 ist die Längsachse die Wasserstandshöhe (m) und ist die Querachse der Abstand entlang eines Fließweges (m) des Reservoirbereichs. Aus Fig. 2 ist ersichtlich, dass je näher der Abstand entlang eines Fließweges des Reservoirbereichs ist, desto dispergierter die Wasserstandsdaten der Schnittebene zu verschiedenen Zeitpunkten sind; dass je weiter der Abstand entlang eines Fließweges des Reservoirbereichs ist, desto ähnlicher die Wasserstandsdaten der Schnittebene zu verschiedenen Zeitpunkten sind. Die spezifizierten hydrologischen Bedingungen können sein: der Wasserstand vor dem Damm beträgt 175 Meter (m), der durchschnittliche Zufluss beträgt 5.000 Kubikmeter (5.000 m3/s) pro Sekunde, die Periode der periodischen Änderung des Zuflusses beträgt 1 Tag und die Flussamplitude beträgt 1.000 m3/s für 5 Tage (d).

Wie in Fig. 3 gezeigt, entspricht die Schnittebene unter dem Abstand entlang eines Fließweges desselben Reservoirbereichs unter den spezifizierten hydrologischen Bedingungen einer Vielzahl von Wasserstandsdaten. Dabei in Fig. 3 ist die Längsachse die Wasserstandshöhe (m) und ist die Querachse der der Abstand entlang eines Fließweges (m) des Reservoirbereichs. Aus Fig. 3 ist ersichtlich, dass je näher der Abstand entlang eines Fließweges des Reservoirbereichs ist, desto dispergierter die Wasserstandsdaten der Schnittebene zu verschiedenen Zeitpunkten sind; dass je weiter der Abstand entlang eines Fließweges des Reservoirbereichs ist, desto ähnlicher die Wasserstandsdaten der Schnittebene zu verschiedenen Zeitpunkten sind. Dabei ist der Abstand entlang eines Fließweges im Reservoirbereich eine Schnittebene von Punkt A, und die Wasserstandsdaten zu verschiedenen Zeitpunkten sind ähnlich. Die spezifizierten hydrologischen Bedingungen können sein: der Wasserstand vor dem Damm beträgt 175 m, der durchschnittliche Zufluss beträgt 50.000 m3/s, die Periode der periodischen Änderung des Zuflusses beträgt 1 Tag und die Flussamplitude beträgt 10.000 m3/s für 5 Tage.

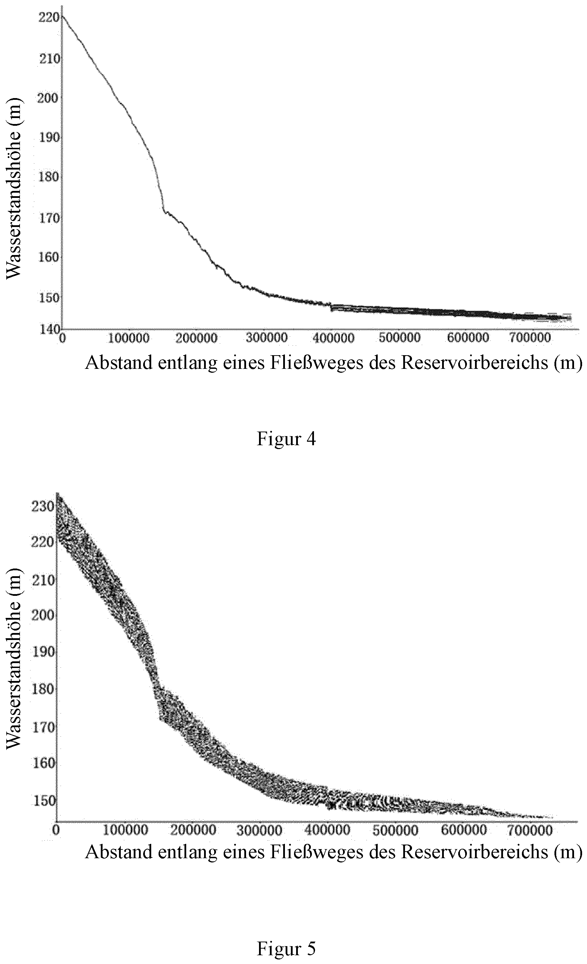

Wie in Fig. 4 gezeigt, entspricht die Schnittebene unter dem Abstand entlang eines Fließweges desselben Reservoirbereichs unter den spezifizierten hydrologischen Bedingungen einer Vielzahl von Wasserstandsdaten. Dabei in Fig. 4 ist die Längsachse die Wasserstandshöhe (m) und ist die Querachse der der Abstand entlang eines Fließweges (m) des Reservoirbereichs. Aus Fig. 4 ist ersichtlich, dass je näher der Abstand entlang eines Fließweges des Reservoirbereichs ist, desto ähnlicher die Wasserstandsdaten der Schnittebene zu verschiedenen Zeitpunkten sind; dass je weiter der Abstand entlang eines Fließweges des Reservoirbereichs ist, desto dispergierter die Wasserstandsdaten der Schnittebene zu verschiedenen Zeitpunkten sind. Die spezifizierten hydrologischen Bedingungen können sein: der durchschnittliche Wasserstand vor dem Damm beträgt 145 m, der Zufluss beträgt 50.000 m3/s, die Periode der periodischen Änderung des Wasserstands vor dem Damm beträgt 1 Tag und die Amplitude des Wasserstands vor dem Damm beträgt 1 m für 5 Tage.

Wie in Fig. 5 gezeigt, ist unter den spezifizierten hydrologischen Bedingungen die Spannweite der Wasserstandsdaten, die der gleichen Schnittebene zu verschiedenen Zeitpunkten entsprechen, groß, so dass die Spannweite der mehreren Sätze von Wasseroberflächenliniendaten, die durch Simulation unter den spezifizierten hydrologischen Bedingungen erhalten werden, groß ist. Dabei in Fig. 5 ist die Längsachse die Wasserstandshöhe (m) und ist die Querachse der der Abstand entlang eines Fließweges (m) des Reservoirbereichs. Die spezifizierten hydrologischen Bedingungen können sein: der Wasserstand vor dem Damm beträgt 145 m, der Zufluss beträgt 50.000 m3/s-95.000 m3/s-50.000 m3/s, die sich innerhalb von 4 Wochen ändert, und die stabile Zeit beträgt 1 Woche.

Schritt S102: Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten.

In dem Ausführungsbeispiel der vorliegenden Erfindung kann durch Lesen der Wasserstandsdaten benachbarter Schnittebenen zu verschiedenen Zeitpunkten bestimmt werden, ob sich die hydrodynamischen Eigenschaften benachbarter Schnittebenen plötzlich gemäß den hydrodynamischen Eigenschaften der erhaltenen benachbarten Schnittebenen ändern, wodurch der Wendepunkt zwischen verschiedenen hydrodynamischen Merkmalsbereichen bestimmt wird.

Daher wird basierend auf den Wasserstandsdaten jeder Schnittebene zu verschiedenen Zeitpunkten innerhalb des spezifizierten Zeitintervalls die erste Anzahl von Schnittebenen gruppiert, um die Korrelation zwischen den Schnittebenen zu bestimmen, wodurch eine zweite Anzahl von hydrodynamischen Merkmalsbereichen erhalten wird, wobei jeder hydrodynamische Merkmalsbereich eine Vielzahl von Schnittebenen umfasst. Unter der zweiten Anzahl kann die Anzahl der zu unterteilenden Bereichstypen verstanden werden.

Schritt S103: Bestimmen eines räumlichen Positionsbereichs jedes hydrodynamischen Merkmalsbereichs basierend auf räumlichen Positionsinformationen einer Vielzahl von Schnittebenen, die in jedem hydrodynamischen Merkmalsbereich enthalten sind.

In dem Ausführungsbeispiel der vorliegenden Erfindung kann das Koordinatenspannenintervall jedes hydrodynamischen Merkmalsbereichs gemäß der räumlichen Positionsinformation der Vielzahl von Schnittebenen bestimmt werden, die in jedem hydrodynamischen Merkmalsbereich enthalten sind, wodurch der räumliche Positionsbereich jedes hydrodynamischen Merkmalsbereichs bestimmt wird.

Schritt S104: Bestimmen eines Bereichstyps, der jedem hydrodynamischen Merkmalsbereich entspricht, basierend auf dem räumlichen Positionsbereich jedes hydrodynamischen Merkmalsbereichs.

In dem Ausführungsbeispiel der vorliegenden Erfindung kann gemäß dem räumlichen Positionsbereich jedes hydrodynamischen Merkmalsbereichs der Bereich des Abstand entlang eines Fließwegess (m) des Reservoirbereichs, der jedem hydrodynamischen Merkmalsbereich entspricht, bestimmt werden, wodurch der Bereichstyp bestimmt wird, der jedem hydrodynamischen Merkmalsbereich entspricht, wobei der Bereichstyp mindestens einen der Kanalbereiche, Übergangsbereiche und Seebereiche umfasst.

Durch das obige Ausführungsbeispiel wird das Reservoir durch Gruppieren in eine zweite Anzahl von hydrodynamischen Merkmalsbereichen basierend auf den Wasserstandsdaten der ersten Anzahl von Schnittebenen innerhalb des Reservoirbereichs des Reservoirs zu verschiedenen Zeitpunkten unter den spezifizierten hydrologischen Bedingungen unterteilt, und die Bereichstypen werden gemäß dem räumlichen Positionsbereich jedes hydrodynamischen Merkmalsbereichs bestimmt, die jedem hydrodynamischen Merkmalsbereich entsprechen, so dass die Ergebnisse nach der Bereichsunterteilung objektiver und referenzierbarer sind, wodurch technische Unterstützung für den tatsächlichen Betrieb und die Planung des Reservoirs bereitgestellt werden kann.

In dem Ausführungsbeispiel kann die Schnittebenenrauheit des kalibrierten Reservoirs basierend auf den Wasserstandsdaten einer Vielzahl von Schnittebenen, dem Abstand zwischen dem Ende des Reservoirs und den gemessenen Durchflussdaten bestimmt werden, um die Parameter des vorkonstruierten eindimensionalen hydrodynamischen Modells zu korrigieren.

In einem Implementierungsszenario können die kalibrierten Ergebnisse wie in Tabelle 1 gezeigt sein. Tabelle 1 ist eine Parameterkorrekturtabelle eines eindimensionalen hydrodynamischen Modells gemäß einem beispielhaften Ausführungsbeispiel, wobei die Schnittebenenrauheit des kalibrierten Reservoirs durch einen Rauheitswert dargestellt werden kann.

Tabelle 1

| Schnittebenennummer | Abstand zwischen dem Ende des Reservoirs/m | Rauheitswert |
|---|---|---|
| 1 | 151200 | 16.8 |
| 2 | 221300 | 37.7 |
| 3 | 253200 | 35.2 |
| 4 | 318000 | 43.2 |
| 5 | 386100 | 52.5 |
| 6 | 417400 | 53.4 |
| 7 | 467900 | 49.9 |
| 8 | 533700 | 47.1 |
| 9 | 590200 | 40.4 |
| 10 | 632800 | 33.2 |
| 11 | 685900 | 28.6 |
| 12 | 719200 | 26.0 |
| 13 | 752200 | 23.8 |
| 14 | 756900 | 24.7 |

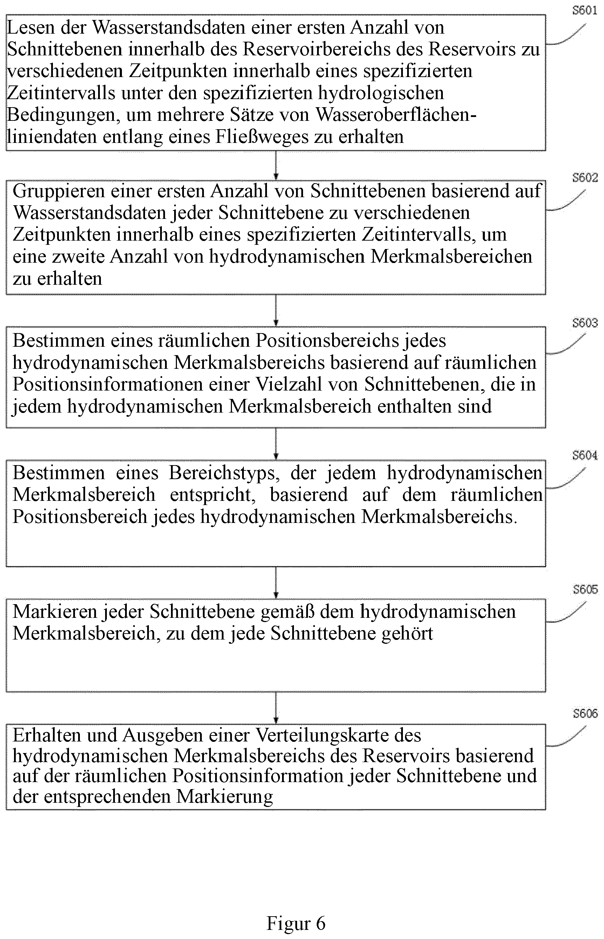

Fig. 6 ist ein Flussdiagramm eines anderen Verfahrens zum Unterteilen der hydrodynamischen Eigenschaften eines Reservoirs gemäß einem beispielhaften Ausführungsbeispiel. Wie in Fig. 6 gezeigt, umfasst das Verfahren zum Unterteilen der hydrodynamischen Eigenschaften eines Reservoirs die folgenden Schritte.

Schritt S601: Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten. Schritt S602: Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten.

Schritt S603: Bestimmen eines räumlichen Positionsbereichs jedes hydrodynamischen Merkmalsbereichs basierend auf räumlichen Positionsinformationen einer Vielzahl von Schnittebenen, die in jedem hydrodynamischen Merkmalsbereich enthalten sind.

Schritt S604: Bestimmen eines Bereichstyps, der jedem hydrodynamischen Merkmalsbereich entspricht, basierend auf dem räumlichen Positionsbereich jedes hydrodynamischen Merkmalsbereichs.

Schritt S605: Markieren jeder Schnittebene gemäß dem hydrodynamischen Merkmalsbereich, zu dem jede Schnittebene gehört.

Um die Bestimmung des hydrodynamischen Merkmalsbereichs zu erleichtern, zu dem jede Schnittebene gehört, wird in dem Ausführungsbeispiel der vorliegenden Erfindung jede Schnittebene gemäß dem hydrodynamischen Merkmalsbereich markiert, zu dem jede Schnittebene gehört.

Um eine schnelle Ausgabe zu erleichtern und zu vermeiden, dass die Anzeige des Benutzers aufgrund übermäßiger Daten in der Verteilungskarte des hydrodynamischen Merkmalsbereichs gestört wird, werden in einem Ausführungsbeispiel die ersten Wasseroberflächenliniendaten entlang eines Fließweges und die zweiten Wasseroberflächenliniendaten entlang eines Fließweges aus einer Vielzahl von Wasseroberflächenliniendaten entlang eines Fließweges gemäß dem Lesezeitpunkt jedes Satzes von Wasseroberflächenliniendaten entlang eines Fließweges erhalten, wobei die ersten Wasseroberflächenliniendaten entlang eines Fließweges als die Wasseroberflächenliniendaten entlang eines Fließweges mit dem frühesten Lesezeitpunkt in den mehreren Sätzen von Wasseroberflächenliniendaten entlang eines Fließweges verstanden werden können, und die zweiten Wasseroberflächenliniendaten entlang eines Fließweges als die Wasseroberflächenliniendaten entlang eines Fließweges mit dem spätesten Lesezeitpunkt in den mehreren Sätzen von Wasseroberflächenliniendaten entlang eines Fließweges verstanden werden können. Gemäß dem hydrodynamischen Merkmalsbereich, zu dem jede Schnittebene gehört, wird jede Schnittebene in den ersten Wasseroberflächenliniendaten entlang eines Fließweges markiert und jede Schnittebene wird in den zweiten Wasseroberflächenliniendaten entlang eines Fließweges markiert.

Schritt S606: Erhalten und Ausgeben einer Verteilungskarte des hydrodynamischen Merkmalsbereichs des Reservoirs basierend auf der räumlichen Positionsinformation jeder Schnittebene und der entsprechenden Markierung.

In dem Ausführungsbeispiel der vorliegenden Erfindung kann die Verteilungsposition jedes hydrodynamischen Merkmalsbereichs innerhalb des Reservoirbereichs gemäß der räumlichen Positionsinformation jeder Schnittebene und der entsprechenden Markierung bestimmt werden, wodurch die Verteilung durch die Verteilungskarte des hydrodynamischen Merkmalsbereichs ausgegeben wird, was dem Benutzer hilft, die Verteilung jedes hydrodynamischen Merkmalsbereichs innerhalb des Reservoirbereichs intuitiv und schnell zu bestimmen.

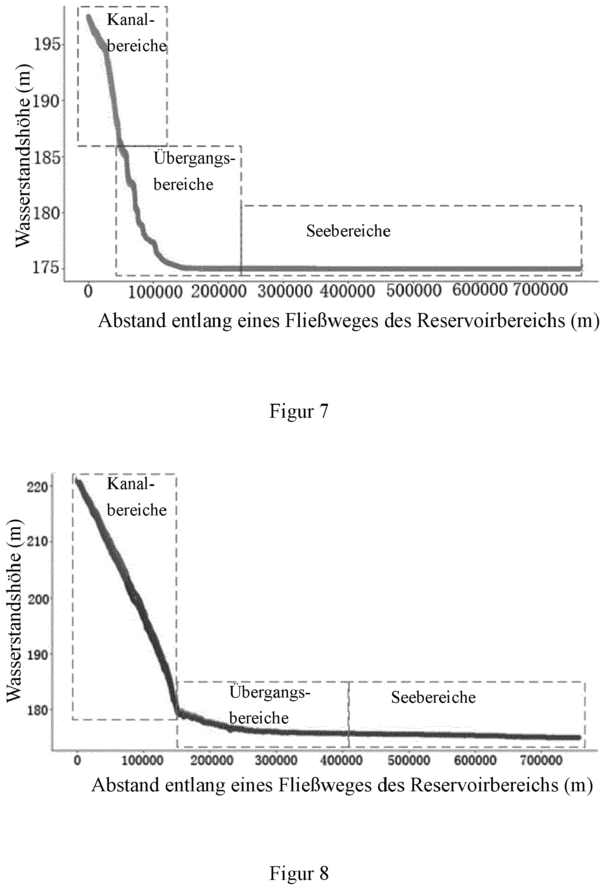

In einem Implementierungsszenario werden in Kombination mit dem in Fig. 2 gezeigten schematischen Diagramm der Wasseroberflächenlinie entlang eines Fließweges mehrere Sätze von Wasseroberflächenlinie entlang eines Fließwegesn gruppiert, um eine Verteilungskarte des hydrodynamischen Merkmalsbereichs zu erhalten und auszugeben, wie in Fig. 7 gezeigt. Fig. 7 ist ein schematisches Diagramm einer Verteilungskarte eines hydrodynamischen Merkmalsbereichs gemäß einem beispielhaften Ausführungsbeispiel. Dabei ist die Längsachse die Wasserstandshöhe (m) und ist die Querachse der der Abstand entlang eines Fließweges (m) des Reservoirbereichs. Um die Anzeige zu erleichtern, wird die zweite Anzahl von 3 als Beispiel genommen, und verschiedene hydrodynamische Merkmalsbereiche entsprechen verschiedenen Bereichstypen. Zu den Bereichstypen gehören Kanalbereiche, Übergangsbereiche und Seebereiche. In einem Beispiel kann es durch verschiedene Farben markiert werden (in der Figur nicht gezeigt), um es dem Benutzer zu erleichtern, den Bereichstyp zu klären, der jedem hydrodynamischen Merkmalsbereich entspricht, wobei die Farben, die den verschiedenen hydrodynamischen Merkmalsbereichen entsprechen, unterschiedlich sind.

In einem anderen Implementierungsszenario werden in Kombination mit dem in Fig. 3 gezeigten schematischen Diagramm der Wasseroberflächenlinie entlang eines Fließweges mehrere Sätze von Wasseroberflächenlinie entlang eines Fließwegesn gruppiert, um eine Verteilungskarte des hydrodynamischen Merkmalsbereichs zu erhalten und auszugeben, wie in Fig. 8 gezeigt. Fig. 8 ist ein schematisches Diagramm einer Verteilungskarte eines hydrodynamischen Merkmalsbereichs gemäß einem beispielhaften Ausführungsbeispiel. Dabei ist die Längsachse die Wasserstandshöhe (m) und ist die Querachse der der Abstand entlang eines Fließweges (m) des Reservoirbereichs. Um die Anzeige zu erleichtern, wird die zweite Anzahl von 3 als Beispiel genommen, und verschiedene hydrodynamische Merkmalsbereiche entsprechen verschiedenen Bereichstypen. Zu den Bereichstypen gehören Kanalbereiche, Übergangsbereiche und Seebereiche. In einem Beispiel kann es durch verschiedene Farben markiert werden (in der Figur nicht gezeigt), um es dem Benutzer zu erleichtern, den Bereichstyp zu klären, der jedem hydrodynamischen Merkmalsbereich entspricht, wobei die Farben, die den verschiedenen hydrodynamischen Merkmalsbereichen entsprechen, unterschiedlich sind.

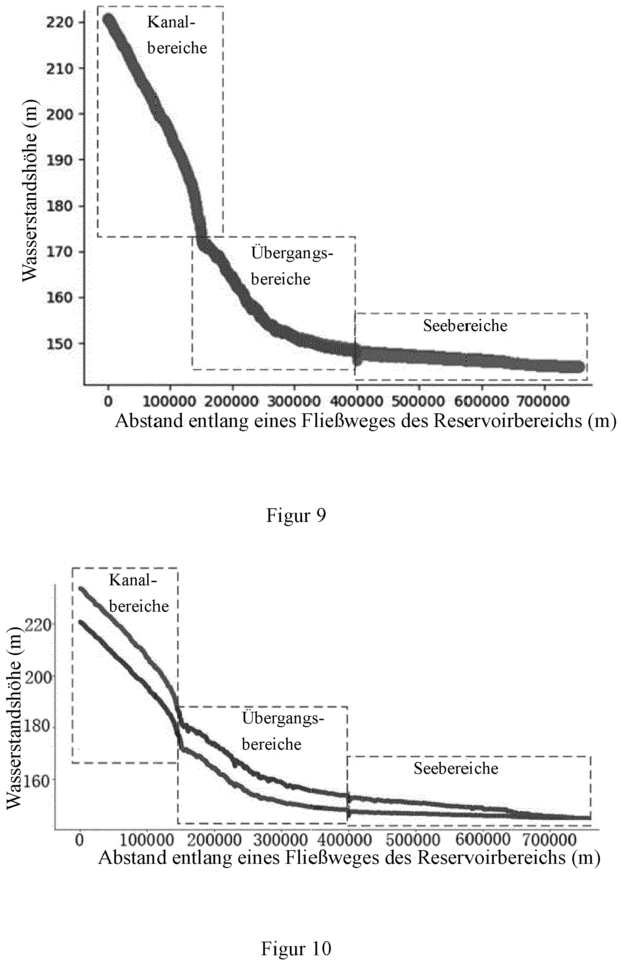

In noch einem anderen Implementierungsszenario werden in Kombination mit dem in Fig. 4 gezeigten schematischen Diagramm der Wasseroberflächenlinie entlang eines Fließweges mehrere Sätze von Wasseroberflächenlinie entlang eines Fließwegesn gruppiert, um eine Verteilungskarte des hydrodynamischen Merkmalsbereichs zu erhalten und auszugeben, wie in Fig. 9 gezeigt. Fig. 9 ist ein schematisches Diagramm einer anderen Verteilungskarte eines hydrodynamischen Merkmalsbereichs gemäß einem beispielhaften Ausführungsbeispiel. Dabei ist die Längsachse die Wasserstandshöhe (m) und ist die Querachse der der Abstand entlang eines Fließweges (m) des Reservoirbereichs. Um die Anzeige zu erleichtern, wird die zweite Anzahl von 3 als Beispiel genommen, und verschiedene hydrodynamische Merkmalsbereiche entsprechen verschiedenen Bereichstypen. Zu den Bereichstypen gehören Kanalbereiche, Übergangsbereiche und Seebereiche. In einem Beispiel kann es durch verschiedene Farben markiert werden (in der Figur nicht gezeigt), um es dem Benutzer zu erleichtern, den Bereichstyp zu klären, der jedem hydrodynamischen Merkmalsbereich entspricht, wobei die Farben, die den verschiedenen hydrodynamischen Merkmalsbereichen entsprechen, unterschiedlich sind.

In noch einem anderen Implementierungsszenario werden in Kombination mit dem in Fig. 5 gezeigten schematischen Diagramm der Wasseroberflächenlinie entlang eines Fließweges mehrere Sätze von Wasseroberflächenlinie entlang eines Fließwegesn gruppiert, um eine Verteilungskarte des hydrodynamischen Merkmalsbereichs zu erhalten und auszugeben, wie in Fig. 10 gezeigt. Fig. 10 ist ein schematisches Diagramm noch einer anderen Verteilungskarte eines hydrodynamischen Merkmalsbereichs gemäß einem beispielhaften Ausführungsbeispiel. Dabei ist die Längsachse die Wasserstandshöhe (m) und ist die Querachse der der Abstand entlang eines Fließweges (m) des Reservoirbereichs. Da die Spannweite der Wasserstandsdaten derselben Schnittebene zu verschiedenen Zeitpunkten unter den spezifizierten hydrologischen Bedingungen entsprechend Fig. 5 groß ist, werden zwei aggregierte Wasseroberflächenlinie entlang eines Fließwegesn durch Gruppieren erhalten. Da die Wendepunkte der zwei aggregierten Wasseroberflächenlinie entlang eines Fließwegesn zwischen verschiedenen hydrodynamischen Merkmalsbereichen gleich sind, wird in Fig. 10 nur die Verteilung der hydrodynamischen Merkmalsbereiche gezeigt, die den spezifizierten hydrologischen Bedingungen entsprechend Fig. 5 entsprechen. Um die Anzeige zu erleichtern, wird die zweite Anzahl von 3 als Beispiel genommen, und verschiedene hydrodynamische Merkmalsbereiche entsprechen verschiedenen Bereichstypen. Zu den Bereichstypen gehören Kanalbereiche, Übergangsbereiche und Seebereiche. In einem Beispiel kann es durch verschiedene Farben markiert werden (in der Figur nicht gezeigt), um es dem Benutzer zu erleichtern, den Bereichstyp zu klären, der jedem hydrodynamischen Merkmalsbereich entspricht, wobei die Farben, die den verschiedenen hydrodynamischen Merkmalsbereichen entsprechen, unterschiedlich sind.

In noch einem anderen Implementierungsszenario kann die Markierung durch verschiedene Farben durchgeführt werden, um die Unterteilung zwischen der Gruppierung der ersten Anzahl von Schnittebenen auf verschiedenen Wasseroberflächenlinie entlang eines Fließwegesn zu erleichtern, wenn verschiedene Wasseroberflächenlinie entlang eines Fließwegesn markiert werden. Es kann verstanden werden, dass die Farbe, die verwendet wird, um den hydrodynamischen Merkmalsbereich zu markieren, zu dem jede Schnittebene in der aktuellen Wasseroberflächenlinie entlang eines Fließweges gehört, völlig anders als die Farbe ist, die verwendet wird, um den hydrodynamischen Merkmalsbereich zu markieren, zu dem jede Schnittebene in der nächsten Wasseroberflächenlinie entlang eines Fließweges gehört. Daher kann die Verteilungskarte des ausgegebenen hydrodynamischen Merkmalsbereichs den hydrodynamischen Merkmalsbereich, zu dem jede Schnittebene zu verschiedenen Zeitpunkten gehört, intuitiver widerspiegeln.

Gemäß der räumlichen Positionsinformation jeder Schnittebene und der entsprechenden Markierung in dem obigen Ausführungsbeispiel wird die Verteilung der zweiten Anzahl von hydrodynamischen Merkmalsbereichen in dem Bereich des Kanals entlang eines Fließweges des Reservoirs durch Bildausgabe ausgegeben. Dies hilft dem Benutzer, die Verteilung jedes hydrodynamischen Merkmalsbereichs innerhalb des Reservoirbereichs intuitiv und schnell zu bestimmen und die Benutzererfahrung zu verbessern.

In einem Ausführungsbeispiel wird der räumliche Positionsbereich des hydrodynamischen Zielmerkmalsbereichs unter jeder dritten Anzahl von hydrodynamischen Bedingungen gemäß dem räumlichen Positionsbereich des hydrodynamischen Zielmerkmalsbereichs unter jeder hydrologischen Bedingung bestimmt. Um die Änderung des räumlichen Positionsbereichs des hydrodynamischen Zielmerkmalsbereichs unter verschiedenen hydrologischen Bedingungen zu bestimmen, wird der räumliche Positionsbereich des hydrodynamischen Zielmerkmalsbereichs im Kanal entlang eines Fließweges des Reservoirs gezielt eingestellt, um die Genauigkeit der Bereichsunterteilung zu verbessern und die erhaltenen Ergebnisse vernünftiger, stabiler und zuverlässiger zu machen.

In einem Implementierungsszenario kann die Unterteilung jedes hydrodynamischen Merkmalsbereichs in Kombination mit der Verteilungskarte des hydrodynamischen Merkmalsbereichs, der in den Fig. 7 bis Fig. 10 gezeigt ist, bestimmt werden. Die Reihenfolge der Bereichstypen, die jedem hydrodynamischen Merkmalsbereich von links nach rechts entsprechen, ist der Kanalbereich, der Übergangsbereich und der Seebereich, wobei der räumliche Positionsbereich, der dem Übergangsbereich unter verschiedenen hydrologischen Bedingungen entspricht, 47.200 m-150.600 m, 74.500 m-154.390 m, 149.400 m-399.396 m und 144.085 m-345.090 m beträgt. Zum Vergleich: Wenn der Wasserstand vor dem Damm 175 m beträgt, reicht der Seebereich von 150 km bis zum Damm. Mit der Zunahme des Zuflusses entwickelte sich die untere Grenze des Kanalbereichs allmählich von 47 km auf 74 km. Bei einem Wasserstand von 145 m vor dem Damm kann sich der Seebereich bis zu 345 km erstrecken. Wenn der Zufluss fest ist und der Wasserstand schwankt, erstreckt sich der Seebereich vor dem Damm auf 390 km, was 5 km kürzer als die Zuflussschwankung ist. Der Seebereich ist im Wesentlichen vom Ende des Reservoirs bis zu 149 km stabil, und es ist kein menschliches Eingreifen erforderlich, was dazu beiträgt, die Wirksamkeit und Rationalität der Unterteilung der hydrodynamischen Merkmalsbereiche zu verbessern.

In einem Ausführungsbeispiel kann eine erste Anzahl von Schnittebenen durch ein gaußsches Mischmodell gruppiert werden, um eine zweite Anzahl von hydrodynamischen Merkmalsbereichen zu erhalten.

Insbesondere ist es beim Aggregatieren notwendig, basierend auf den Wasserstandsdaten jeder Schnittebene zu verschiedenen Zeitpunkten innerhalb des spezifizierten Zeitintervalls zu aggregieren. Daher kann das Gruppieren vorzugsweise durch ein gaußsches Verteilungsmodell durchgeführt werden, um die Effektivität und Genauigkeit des Gruppierens zu verbessern. Daher wird die erste Anzahl von Schnittebenen durch das gaußsche Mischmodell des unüberwachten Lernens gruppiert, und die zweite Anzahl von gaußschen Verteilungsmodellen wird erhalten, um die Gruppierung schnell abzuschließen, wobei das gaußsche Mischmodell aus einer zweiten Anzahl von gaußschen Verteilungsmodellen besteht, und verschiedene gaußsche Verteilungsmodelle verwendet werden, um verschiedene hydrodynamische Merkmalsbereiche zu bestimmen, und die Parameter, die verschiedenen gaußschen Verteilungsmodellen entsprechen, unterschiedlich sind. Die erste Anzahl von Schnittebenen wird durch eine zweite Anzahl von gaußschen Verteilungsmodellen gruppiert, um eine zweite Anzahl von hydrodynamischen Merkmalsbereichen zu erhalten, wobei die Anzahl der gaußschen Verteilungsmodelle in dem gaußschen Mischmodell von der Anzahl der zu gruppierenden hydrodynamischen Merkmalsbereiche abhängt. Das heißt, die Anzahl der zu gruppierenden hydrodynamischen Merkmalsbereiche ist die gleiche wie die Anzahl der gaußschen Verteilungsmodelle in dem gaußschen Mischmodell. Wenn zum Beispiel das Reservoir in drei hydrodynamische Merkmalsbereiche mit unterschiedlichen Bereichstypen unterteilt werden muss, beträgt die Anzahl der gaußschen Verteilungsmodelle 3. In einem Beispiel können die Wasserstandsdaten jeder Schnittebene zu verschiedenen Zeitpunkten vorverarbeitet und dann durch die zweite Anzahl von gaußschen Verteilungsmodellen in dem gaußschen Mischmodell gruppiert werden, um die Effektivität der Daten zu verbessern, wobei die Vorverarbeitung Datenbereinigung, Normalisierung, Standardisierungsverarbeitung usw. umfasst, die in der vorliegenden Erfindung nicht definiert sind.

In einem Ausführungsbeispiel wird jedes gaußsche Verteilungsmodell in der zweiten Anzahl von gaußschen Verteilungsmodellen nacheinander als das gaußsche Zielverteilungsmodell während des Gruppierungsprozesses ausgewählt. Die gaußsche Verteilungswahrscheinlichkeit jeder Schnittebene wird durch Berechnen des gaußschen Zielverteilungsmodells basierend auf den Wasserstandsdaten jeder Schnittebene zu verschiedenen Zeitpunkten innerhalb des spezifizierten Zeitintervalls berechnet. Um die gaußsche Verteilung der ersten Anzahl von Schnittebenen unter dem gaußschen Zielverteilungsmodell zu bestimmen, wird eine Vielzahl von Zielschnittebenen in der ersten Anzahl von Schnittebenen bestimmt, die gemäß der gaußschen Verteilung in den hydrodynamischen Zielmerkmalsbereich aggregiert werden sollen, wobei der hydrodynamische Zielmerkmalsbereich ein dynamischer Merkmalsbereich ist, der dem gaußschen Zielverteilungsmodell entspricht. Eine Vielzahl von Zielschnittebenen wird in den hydrodynamischen Zielmerkmalsbereich aggregiert, um den hydrodynamischen Zielmerkmalsbereich zu erhalten.

In einem Implementierungsszenario wird die zweite Anzahl von 3 als Beispiel genommen, um drei gaußsche Verteilungsmodelle mit unterschiedlichen Parametern zu erhalten. Jedes gaußsche Verteilungsmodell kann durch die folgende Formel dargestellt werden:

$$p(x) = \sum_{i=1}^{k} \emptyset_i \frac{1}{\sqrt{2\sigma_i^2 \pi}} e^{-\frac{(x-\mu_i)^2}{2\sigma_i^2}}$$

,

Dabei x die aktuelle Schnittebene darstellt, i eine der Wasserstandsdaten der aktuellen Schnittebene darstellt, p (x) die Wahrscheinlichkeit darstellt, dass die Wasserstandsdaten der aktuellen Schnittebene durch das aktuelle gaußsche Verteilungsmodell erzeugt werden, der Mittelwert $\mu i$, die Varianz $\sigma i$ und der Gewichtskoeffizient $\emptyset i$, der der gaußschen Verteilung entspricht, die Parameter des aktuellen gaußschen Verteilungsmodells darstellen, und

$$\sum_{i=1}^{k} \emptyset_i = 1$$

.

Die Wasserstandsdaten jeder Schnittebene zu verschiedenen Zeitpunkten werden nacheinander in jedes gaußsche Verteilungsmodell in der zweiten Anzahl von gaußschen Verteilungsmodellen zum Gruppieren eingegeben. Dadurch wird die Wahrscheinlichkeit berechnet, die durch das aktuelle gaußsche Verteilungsmodell der Wasserstandsdaten jeder Schnittebene erzeugt wird. Die Parameter jedes gaußschen Verteilungsmodells werden basierend auf der erzeugten Wahrscheinlichkeit verbessert, bis sich die Parameter jeder zweiten Anzahl von gaußschen Verteilungsmodellen nicht mehr ändern oder der Änderungswert reduziert wird, wodurch das Gruppieren gestoppt wird. Gemäß dem Gruppierungsergebnis wird die gaußsche Verteilung jeder ersten Anzahl von Schnittebenen unter jedem gaußschen Verteilungsmodell bestimmt, um den hydrodynamischen Zielmerkmalsbereich zu bestimmen, der jeder Schnittebene entspricht.

Gemäß dem obigen Ausführungsbeispiel kann basierend auf der Änderung des Wasserstands jeder Schnittebene zu verschiedenen Zeitpunkten bestimmt werden, ob sich die hydrodynamischen Eigenschaften der benachbarten Schnittebene plötzlich gemäß den hydrodynamischen Eigenschaften der erhaltenen benachbarten Schnittebene ändern. Darüber hinaus wird jede Schnittebene gruppiert, was dazu beiträgt, die subjektive Beeinflussung der künstlichen Unterteilung zu vermeiden und das Bereichsunterteilungsergebnis des erhaltenen hydrodynamischen Merkmalsbereichs objektiver und vernünftiger zu machen.

In einem Implementierungsszenario kann der Prozess der Vorhersage jedes hydrodynamischen Merkmalsbereichs des Kanals entlang eines Fließweges des Reservoirs wie folgt sein:
Zunächst werden gemäß den topografischen Daten und hydrometeorologischen Daten des Reservoirs der Reservoirbereich und der Einstellbereich des Wasserstands vor dem Damm des Reservoirs bestimmt, und die charakteristischen Wasserstandswerte wie der normale Wasserspeicherstand, der Hochwasserschutzgrenzstand und der minimale Wasserabfallstand während der Trockenzeit werden bestimmt. Die topografischen Schnittebenendaten des Reservoirs, der Zufluss im Laufe der Jahre, der Wasserstand vor dem Damm und andere Daten werden gesammelt, um die dritte Anzahl von hydrologischen Bedingungen für die zu lesenden Wasseroberflächenliniendaten entlang eines Fließweges zu bestimmen.

Zweitens wird ein eindimensionales hydrodynamisches Modell erstellt, das für das Reservoir geeignet ist, um die Wasserstandsdaten der ersten Anzahl von Schnittebenen innerhalb des Reservoirbereichs des Reservoirs zu verschiedenen Zeitpunkten innerhalb des spezifizierten Zeitintervalls basierend auf konstanten Flussbedingungen unter jeder der dritten hydrologischen Bedingungen zu lesen. Die Schnittebenenrauheit des Modells wird durch die Wasserstandsdaten und die gemessenen Durchflussdaten mehrerer Schnittebenen kalibriert, um die Parameter des eindimensionalen hydrodynamischen Modells zu modifizieren.

Dann werden die Wasserstandsdaten der ersten Anzahl von Schnittebenen, die unter jeder hydrologischen Bedingung gelesen werden, sequentiell durch die zweite Anzahl von gaußschen Verteilungsmodellen in dem gaußschen Mischmodell zu verschiedenen Zeitpunkten innerhalb des spezifizierten Zeitintervalls gruppiert, um eine zweite Anzahl von hydrodynamischen Merkmalsbereichen für jede hydrologische Bedingung zu erhalten. Darunter wird der räumliche Positionsbereich jedes hydrodynamischen Merkmalsbereichs gemäß der räumlichen Positionsinformation der Vielzahl von Schnittebenen bestimmt, die in jedem hydrodynamischen Merkmalsbereich für die aktuellen hydrologischen Bedingungen enthalten sind, wodurch der Bereichstyp bestimmt wird, der jedem hydrodynamischen Merkmalsbereich entspricht.

Die zweite Anzahl von hydrodynamischen Merkmalsbereichen im Kanal entlang eines Fließweges wird durch die Verteilungskarte der hydrodynamischen Merkmalsbereiche angezeigt.

Schließlich wird die Verteilungskarte des hydrodynamischen Merkmalsbereichs, der jeder hydrologischen Bedingung entspricht, umfassend verglichen, um die Änderungen jedes hydrodynamischen Merkmalsbereichs innerhalb des Reservoirbereichs des Reservoirs unter verschiedenen hydrologischen Bedingungen zu bestimmen.

Durch das obige Ausführungsbeispiel kann der Änderungsprozess der Wasseroberflächenlinie unter verschiedenen Bedingungen des Wasserstands vor dem Damm und des Zuflusses durch ein eindimensionales hydrodynamisches Modell erhalten werden. Durch unüberwachtes Lernen der Ergebnisse wird der dynamische Variationsbereich von Kanälen, Seen und deren Übergangsbereichen angegeben. Der Kanal entlang eines Fließweges des Reservoirs ist von stromaufwärts nach stromabwärts in drei Bereiche unterteilt: Kanalbereich, Übergangsbereich und Seebereich.

Das Verfahren zum Unterteilen der hydrodynamischen Eigenschaften eines Reservoirs gemäß der vorliegenden Erfindung wird verwendet. Es kann nicht nur den hydrodynamischen Merkmalsbereich des Reservoirs unter jeder hydrologischen Bedingung effektiv unterteilen, sondern auch die Änderungen jedes hydrodynamischen Merkmalsbereichs mit der Änderung der äußeren Randbedingungen und seines Einflussbereichs dynamisch vergleichen. Daher werden die Probleme der Speicherkapazitätsfehlanpassung und des ungenauen Hochwasserprozesses, die durch den traditionellen statischen Kanal- und Seebereich verursacht werden, gelöst, was eine wichtige technische Unterstützung für die reibungslose Planung und den sicheren Betrieb des Reservoirs bietet.

Basierend auf dem gleichen Erfindungskonzept stellt die vorliegende Erfindung auch eine Vorrichtung zum Unterteilen der hydrodynamischen Eigenschaften eines Reservoirs bereit.

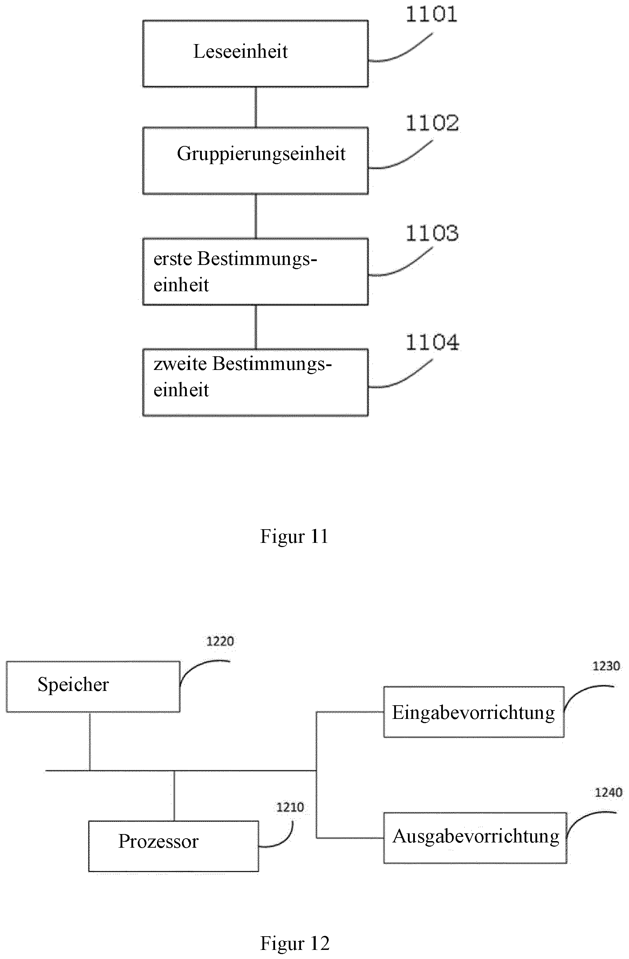

Fig. 11 ist ein Blockdiagramm einer Struktur einer Vorrichtung zum Unterteilen der hydrodynamischen Eigenschaften eines Reservoirs gemäß einem beispielhaften Ausführungsbeispiel. Wie in Fig. 11 gezeigt, umfasst die Vorrichtung zum Unterteilen der hydrodynamischen Eigenschaften eines Reservoirs eine Leseeinheit 1101, eine Gruppierungseinheit 1102, eine erste Bestimmungseinheit 1103 und eine zweite

Bestimmungseinheit 1104.

Eine Leseeinheit 1101 zum Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten, wobei jeder Satz von Wasseroberflächenliniendaten entlang eines Fließweges Wasserstandsdaten umfasst, die der ersten Anzahl von Schnittebenen zu der gleichen Zeit entsprechen,

Eine Gruppierungseinheit 1102 zum Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten, wobei jeder hydrodynamische Merkmalsbereich eine Vielzahl von Schnittebenen umfasst,

Eine erste Bestimmungseinheit 1103 zum Bestimmen eines räumlichen Positionsbereichs jedes hydrodynamischen Merkmalsbereichs basierend auf räumlichen Positionsinformationen einer Vielzahl von Schnittebenen, die in jedem hydrodynamischen Merkmalsbereich enthalten sind,

Eine zweite Bestimmungseinheit 1104 zum Bestimmen eines Bereichstyps, der jedem hydrodynamischen Merkmalsbereich entspricht, basierend auf dem räumlichen Positionsbereich jedes hydrodynamischen Merkmalsbereichs.

In einem Ausführungsbeispiel umfasst die Gruppierungseinheit 1102 die folgenden Komponenten: eine erste Erfassungseinheit zum Erfassen eines gaußschen Mischmodells, das aus einer zweiten Anzahl von gaußschen Verteilungsmodellen besteht, wobei verschiedene gaußsche Verteilungsmodelle zum Bestimmen verschiedener hydrodynamischer Merkmalsbereiche verwendet werden, eine Gruppierungsuntereinheit zum Gruppieren der ersten Anzahl von Schnittebenen durch das gaußsche Mischmodell basierend auf Wasserstandsdaten jeder Schnittebene zu verschiedenen Zeitpunkten innerhalb eines spezifizierten Zeitintervalls, um die zweite Anzahl von hydrodynamischen Merkmalsbereichen zu erhalten.

In einem anderen Ausführungsbeispiel umfasst die Gruppierungsuntereinheit die folgenden Komponenten: eine Modellauswahleinheit zum Auswählen eines der gaußschen Verteilungsmodelle in der zweiten Anzahl von gaußschen Verteilungsmodellen eins nach dem anderen als gaußsches Zielverteilungsmodell, eine dritte Bestimmungseinheit zum Berechnen der gaußschen Verteilungswahrscheinlichkeit jeder Schnittebene durch das gaußsche Zielverteilungsmodell basierend auf Wasserstandsdaten jeder Schnittebene zu verschiedenen Zeitpunkten innerhalb eines spezifizierten Zeitintervalls, um die gaußsche Verteilung der ersten Anzahl von Schnittebenen unter dem gaußschen Zielverteilungsmodell zu bestimmen, eine vierte Bestimmungseinheit zum Bestimmen einer Vielzahl von Zielschnittebenen in der ersten Anzahl von Schnittebenen, die in den hydrodynamischen Zielmerkmalsbereich aggregiert werden sollen, basierend auf der gaußschen Verteilung, dass der hydrodynamische Zielmerkmalsbereich ein dynamischer Merkmalsbereich ist, der dem gaußschen Zielverteilungsmodell entspricht, eine Aggregationseinheit zum Aggregieren der Vielzahl von Zielschnittebenen in den hydrodynamischen Zielmerkmalsbereich, um den hydrodynamischen Zielmerkmalsbereich zu erhalten.

In noch einem anderen Ausführungsbeispiel umfasst die Vorrichtung die folgenden Komponenten: eine Markierungseinheit zum Markieren jeder Schnittebene gemäß dem hydrodynamischen Merkmalsbereich, zu dem jede Schnittebene gehört, eine Ausgabeeinheit zum Erhalten und Ausgeben einer Verteilungskarte des hydrodynamischen Merkmalsbereichs des Reservoirs basierend auf der räumlichen Positionsinformation jeder Schnittebene und der entsprechenden Markierung.

In einem anderen Ausführungsbeispiel umfasst die Ausgabeeinheit die folgenden Komponenten: eine zweite Erfassungseinheit zum Erfassen der ersten Wasseroberflächenliniendaten entlang eines Fließweges und der zweiten Wasseroberflächenliniendaten entlang eines Fließweges von den mehreren Sätzen von Wasseroberflächenliniendaten entlang eines Fließweges gemäß dem Lesezeitpunkt jedes Satzes von Wasseroberflächenliniendaten entlang eines Fließweges, wobei die ersten Wasseroberflächenliniendaten entlang eines Fließweges Wasseroberflächenliniendaten entlang eines Fließweges mit dem frühesten Lesezeitpunkt in den mehreren Sätzen von Wasseroberflächenliniendaten entlang eines Fließweges sind und die zweiten Wasseroberflächenliniendaten entlang eines Fließweges Wasseroberflächenliniendaten entlang eines Fließweges mit dem spätesten Lesezeitpunkt in den mehreren Sätzen von Wasseroberflächenliniendaten entlang eines Fließweges sind, eine Ausgabeuntereinheit zum Markieren jeder Schnittebene in den ersten Wasseroberflächenliniendaten entlang eines Fließweges und Markieren jeder Schnittebene in den zweiten Wasseroberflächenliniendaten entlang eines Fließweges gemäß dem hydrodynamischen Merkmalsbereich, zu dem jede Schnittebene gehört.

In einem anderen Ausführungsbeispiel umfasst die Vorrichtung die folgenden Komponenten: eine Bedingungsfiltereinheit zum Auswählen einer der hydrologischen Bedingungen aus einer dritten Anzahl von hydrologischen Bedingungen als die spezifizierte hydrologische Bedingung, wobei die hydrologische Bedingung mindestens einen spezifizierten Wasserstand vor dem Damm und spezifizierte Zuflussdaten umfasst.

In einem anderen Ausführungsbeispiel umfasst die Vorrichtung die folgenden Komponenten: eine fünfte Bestimmungseinheit zum Bestimmen einer Änderung des räumlichen Positionsbereichs des hydrodynamischen Zielmerkmalsbereichs unter jeder dritten Anzahl von hydrodynamischen Bedingungen gemäß dem räumlichen Positionsbereich des hydrodynamischen Zielmerkmalsbereichs unter jeder der dritten Anzahl von hydrologischen Bedingungen, eine Einstelleinheit zum Einstellen eines räumlichen Positionsbereichs des hydrodynamischen Zielmerkmalsbereichs in dem Kanal entlang eines Fließweges des Reservoirs gemäß einer Änderung des räumlichen Positionsbereichs.

In einem anderen Ausführungsbeispiel umfasst der Bereichstyp mindestens einen der Kanalbereiche, Übergangsbereiche und Seebereiche.

Die spezifische Definition und die vorteilhaften Wirkungen der Vorrichtung zum Unterteilen der hydrodynamischen Eigenschaften eines Reservoirs können in der obigen Definition des Verfahrens zum Unterteilen der hydrodynamischen Eigenschaften eines Reservoirs gesehen werden, die hier nicht wiederholt wird. Jedes der obigen Module kann ganz oder teilweise durch Software, Hardware und deren Kombination implementiert werden. Jedes der obigen Module kann in einem Prozessor in einer Computerausrüstung in einer Hardwareform eingebettet oder unabhängig von ihm oder in einem Speicher in einer Computerausrüstung in einer Softwareform gespeichert werden, um den Prozessoraufruf zum Ausführen von Operationen zu erleichtern, die jedem der obigen Module entsprechen.

Fig. 12 ist ein schematisches Diagramm einer Hardwarestruktur einer Computerausrüstung gemäß einem beispielhaften Ausführungsbeispiel. Wie in Fig. 12 gezeigt, umfasst die Ausrüstung einen oder mehrere Prozessoren 1210 und einen Speicher 1220, wobei der Speicher 1220 einen persistenten Speicher, einen flüchtigen Speicher und eine Festplatte umfasst. Ein Prozessor 1210 wird als Beispiel in Fig. 12 genommen. Die Ausrüstung kann auch eine Eingabevorrichtung 1230 und eine Ausgabevorrichtung 1240 umfassen.

Der Prozessor 1210, der Speicher 1220, die Eingabevorrichtung 1230 und die Ausgabevorrichtung 1240 können über einen Bus oder auf andere Weise verbunden sein. In Fig. 12 wird die Busverbindung als Beispiel genommen.

Der Prozessor 1210 kann ein zentraler Prozessor (Central Processing Unit, CPU) sein. Der Prozessor 1210 kann auch andere Allzweckprozessoren, digitale Signalprozessoren (Digital Signal Processor, DSP), ASICs (Application Specific Integrated Circuit, ASIC), feldprogrammierbare Gate-Arrays (Field-Programmable Gate Array, FPGA) oder andere programmierbare Logikbausteine, diskrete Gate- oder Transistorlogikbausteine, diskrete Hardwarekomponenten und andere Chips oder Kombinationen der oben genannten Chips sein. Der Allzweckprozessor kann ein Mikroprozessor sein, oder der Prozessor kann auch ein herkömmlicher Prozessor usw. sein.

Der Speicher 1220 kann als nicht transientes computerlesbares Speichermedium, einschließlich persistentem Speicher, flüchtigem Speicher und Festplatte, zum Speichern von nicht transienten Softwareprogrammen, nicht transienten computerausführbaren Programmen und Modulen wie Programmbefehlen/Modulen verwendet werden, die dem Dienstverwaltungsverfahren in dem Ausführungsbeispiel der vorliegenden Erfindung entsprechen. Der Prozessor 1210 führt ein nicht transientes Softwareprogramm, Befehle und Module aus, die in dem Speicher 1220 gespeichert sind, wodurch verschiedene funktionale Anwendungen und Datenverarbeitung des Servers durchgeführt werden, d.h. ein Verfahren zum Unterteilen der hydrodynamischen Eigenschaften eines der obigen Reservoire.

Der Speicher 1220 kann einen Speicherprogrammbereich und einen Speicherdatenbereich umfassen, wobei der Speicherprogrammbereich ein Betriebssystem, mindestens eine Anwendung speichern kann, die für eine Funktion erforderlich ist, wobei der Speicherdatenbereich Daten usw. speichern kann, die nach Bedarf verwendet werden. Zusätzlich kann der Speicher 1220 einen Hochgeschwindigkeits-Direktzugriffsspeicher und einen nicht transienten Speicher umfassen, z. B. mindestens eine Plattenspeichervorrichtung, eine Flash-Speichervorrichtung oder eine andere nicht transiente Festkörperspeichervorrichtung. In einigen Ausführungsbeispielen kann der Speicher 1220 optional einen Speicher umfassen, der relativ zu dem Prozessor 1210 ferneingestellt ist, der über ein Netzwerk mit der Datenverarbeitungsvorrichtung verbunden werden kann. Beispiele für die obigen Netzwerke umfassen, sind aber nicht beschränkt auf das Internet, das Intranet des Unternehmens, das lokale Netzwerk, das Mobilkommunikationsnetz und seine Kombinationen.

Die Eingabevorrichtung 1230 kann eingegebene Zahlen- oder Zeicheninformationen empfangen und Schlüsselsignaleingaben erzeugen, die sich auf Benutzereinstellungen und Funktionssteuerungen beziehen. Die Ausgabevorrichtung 1240 kann eine Anzeigevorrichtung wie eine Anzeige umfassen.

Ein oder mehrere Module werden in dem Speicher 1220 gespeichert, und wenn sie von einem oder mehreren Prozessoren 1210 ausgeführt werden, wird das in Fig. 1-Fig. 10 gezeigte Verfahren durchgeführt.

Das obige Produkt kann ein Verfahren gemäß einem Ausführungsbeispiel der vorliegenden Erfindung ausführen und weist ein entsprechendes Funktionsmodul und eine vorteilhafte Wirkung zum Ausführen des Verfahrens auf. Technische Details, die in dem Ausführungsbeispiel nicht im Detail beschrieben sind, können insbesondere in der relevanten Beschreibung in dem in Fig. 1-Fig. 10 gezeigten Ausführungsbeispiel beschrieben werden.

Ein nicht transientes Computerspeichermedium wird gemäß einem Ausführungsbeispiel der vorliegenden Erfindung bereitgestellt, wobei das Computerspeichermedium computerausführbare Befehle speichert. Der computerausführbare Befehl kann ein Authentifizierungsverfahren in einem Ausführungsbeispiel eines der obigen Verfahren ausführen, wobei das Speichermedium eine Festplatte, eine optische Platte, ein schreibgeschützter Speicherspeicher (Read-Only Memory, ROM), ein Direktspeicherspeicher (Random Access Memory, RAM), ein Flash-Speicher (Flash Memory), eine Festplatte (Hard Disk Drive, Abkürzung: HDD) oder eine Festkörperfestplatte (Solid-State Drive, SSD) sein kann, wobei das Speichermedium auch eine Kombination der obigen Speichertypen enthalten kann.

Offensichtlich ist das obige Ausführungsbeispiel nur eine klare Beschreibung der Beispiele und keine Begrenzung der Ausführungsform. Auf der Grundlage der obigen Beschreibung kann der gewöhnliche Fachmann auch andere Formen von Modifikationen oder Änderungen vornehmen. Hier müssen und können nicht alle Ausführungsformen erschöpfend sein. Die offensichtlichen Modifikationen oder Änderungen, die hierdurch erweitert werden, liegen immer noch im Schutzbereich der vorliegenden Erfindung.

**Patentansprüche**

1. Verfahren zum Unterteilen der hydrodynamischen Eigenschaften eines Reservoirs, **dadurch gekennzeichnet, dass** das Verfahren die folgenden Schritte umfasst:

Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten, wobei jeder Satz von Wasseroberflächenliniendaten entlang eines Fließweges Wasserstandsdaten umfasst, die der ersten Anzahl von Schnittebenen zu dem gleichen Zeitpunkt entsprechen,

Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten, wobei jeder hydrodynamische Merkmalsbereich eine Vielzahl von Schnittebenen umfasst,

Bestimmen eines räumlichen Positionsbereichs jedes hydrodynamischen Merkmalsbereichs basierend auf räumlichen Positionsinformationen einer Vielzahl von Schnittebenen, die in jedem hydrodynamischen Merkmalsbereich enthalten sind,

Bestimmen eines Bereichstyps, der jedem hydrodynamischen Merkmalsbereich entspricht, basierend auf dem räumlichen Positionsbereich jedes hydrodynamischen Merkmalsbereichs.

2. Verfahren nach Anspruch 1, **dadurch gekennzeichnet, dass** das Gruppieren einer ersten Anzahl von Schnittebenen basierend auf Wasserstandsdaten jedes Schnittebenen zu verschiedenen Zeitpunkten innerhalb eines spezifizierten Zeitintervalls, um eine zweite Anzahl von hydrodynamischen Merkmalsbereichen zu erhalten, umfassend:

Erfassen eines gaußschen Mischmodells, das aus einer zweiten Anzahl von gaußschen Verteilungsmodellen besteht, wobei verschiedene gaußsche Verteilungsmodelle verwendet werden, um verschiedene hydrodynamische Merkmalsbereiche zu bestimmen,

Gruppieren der ersten Anzahl von Schnittebenen durch das gaußsche Mischmodell basierend auf Wasserstandsdaten jeder Schnittebene zu verschiedenen Zeitpunken innerhalb eines spezifizierten Zeitintervalls, um die zweite Anzahl von hydrodynamischen Merkmalsbereichen zu erhalten.

3. Verfahren nach Anspruch 2, **dadurch gekennzeichnet, dass** das Gruppieren der ersten Anzahl von Schnittebenen durch das gaußsche Mischmodell basierend auf Wasserstandsdaten jeder Schnittebene zu verschiedenen Zeitpunken innerhalb eines spezifizierten Zeitintervalls, um die zweite Anzahl von hydrodynamischen Merkmalsbereichen zu erhalten, umfassend:

Auswählen eines der gaußschen Verteilungsmodelle in der zweiten Anzahl von gaußschen Verteilungsmodellen eins nach dem anderen als gaußsches Zielverteilungsmodell,

Berechnen der gaußschen Verteilungswahrscheinlichkeit jeder Schnittebene durch das gaußsche Zielverteilungsmodell basierend auf Wasserstandsdaten jeder Schnittebene zu verschiedenen Zeitpunken innerhalb eines spezifizierten Zeitintervalls, um die gaußsche Verteilung der ersten Anzahl von Schnittebenen unter dem gaußschen Zielverteilungsmodell zu bestimmen,

Bestimmen einer Vielzahl von Zielschnittebenen in der ersten Anzahl von Schnittebenen, die in den hydrodynamischen Zielmerkmalsbereich aggregiert werden sollen, basierend auf der gaußschen Verteilung, dass der hydrodynamische Zielmerkmalsbereich ein dynamischer Merkmalsbereich ist, der dem gaußschen Zielverteilungsmodell entspricht,

Aggregatieren der Vielzahl von ZielSchnittebenen in den hydrodynamischen Zielmerkmalsbereich, um den hydrodynamischen Zielmerkmalsbereich zu erhalten.

4. Verfahren nach Anspruch 1, **dadurch gekennzeichnet, dass** das Verfahren auch die folgenden Schritte umfasst:

Markieren jeder Schnittebene gemäß dem hydrodynamischen Merkmalsbereich, zu dem jede Schnittebene gehört,

Erhalten und Ausgeben einer Verteilungskarte des hydrodynamischen Merkmalsbereichs des Reservoirs basierend auf der räumlichen Positionsinformation jeder Schnittebene und der entsprechenden Markierung.

5. Verfahren nach Anspruch 4, **dadurch gekennzeichnet, dass** das Markieren jeder Schnittebene gemäß dem hydrodynamischen Merkmalsbereich, zu dem jede Schnittebene gehört, umfassend:
Erfassen der ersten Wasseroberflächenliniendaten entlang eines Fließweges und der zweiten Wasseroberflächenliniendaten entlang eines Fließweges von den mehreren Sätzen von Wasseroberflächenliniendaten entlang eines Fließweges gemäß des Lesezeitpunktes jedes Satzes von Wasseroberflächenliniendaten entlang eines Fließweges, wobei die ersten Wasseroberflächenliniendaten entlang eines Fließweges Wasseroberflächenliniendaten entlang eines Fließweges entlang eines Fließweges mit dem frühesten Lesezeitpunkt in den mehreren Sätzen von Wasseroberflächenliniendaten entlang eines Fließweges sind und die zweiten Wasseroberflächenliniendaten entlang eines Fließweges Wasseroberflächenliniendaten entlang eines Fließweges mit dem spätesten Lesezeitpunkt in den mehreren Sätzen von Wasseroberflächenliniendaten entlang eines Fließweges sind, Markieren jeder Schnittebene in den ersten Wasseroberflächenliniendaten entlang eines Fließweges und Markieren jeder Schnittebene in den zweiten Wasseroberflächenliniendaten entlang eines Fließweges gemäß dem hydrodynamischen Merkmalsbereich, zu dem jeder Schnittebene gehört.

6. Verfahren nach Anspruch 1, **dadurch gekennzeichnet, dass** das Verfahren auch die folgenden Schritte umfasst: Auswählen einer der hydrologischen Bedingungen aus einer dritten Anzahl von hydrologischen Bedingungen als die spezifizierte hydrologische Bedingung, wobei die hydrologische Bedingung mindestens einen spezifizierten Wasserstand vor dem Damm und spezifizierte Zuflussdaten umfasst.

7. Verfahren nach Anspruch 6, **dadurch gekennzeichnet, dass** das Verfahren auch die folgenden Schritte umfasst:

   Bestimmen einer Änderung des räumlichen Positionsbereichs des hydrodynamischen Zielmerkmalsbereichs unter jeder dritten Anzahl von hydrodynamischen Bedingungen gemäß dem räumlichen Positionsbereich des hydrodynamischen Zielmerkmalsbereichs unter jeder der dritten Anzahl von hydrologischen Bedingungen, Einstellen eines räumlichen Positionsbereichs des hydrodynamischen Zielmerkmalsbereichs in dem Kanal des Reservoirs entlang eines Fließweges gemäß einer Änderung des räumlichen Positionsbereichs.

8. Verfahren nach Anspruch 1, **dadurch gekennzeichnet, dass** der Bereichstyp mindestens einen der Kanalbereiche, Übergangsbereiche und Seebereiche umfasst.

9. Vorrichtung zum Unterteilen der hydrodynamischen Eigenschaften eines Reservoirs, **dadurch gekennzeichnet, dass** die Vorrichtung die folgenden Komponenten umfasst:

   eine Leseeinheit zum Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten, wobei jeder Satz von Wasseroberflächenliniendaten entlang eines Fließweges Wasserstandsdaten umfasst, die der ersten Anzahl von Schnittebenen zu dem gleichen Zeitpunkt entsprechen,
   eine Gruppierungseinheit zum Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten, wobei jeder hydrodynamische Merkmalsbereich eine Vielzahl von Schnittebenen umfasst,
   eine erste Bestimmungseinheit zum Bestimmen eines räumlichen Positionsbereichs jedes hydrodynamischen Merkmalsbereichs gemäß räumlichen Positionsinformationen einer Vielzahl von Schnittebenen, die in jedem hydrodynamischen Merkmalsbereich enthalten sind,
   eine zweite Bestimmungseinheit zum Bestimmen eines Bereichstyps, der jedem hydrodynamischen Merkmalsbereich entspricht, gemäß dem räumlichen Positionsbereich jedes hydrodynamischen Merkmalsbereichs.

10. Computerausrüstung, **dadurch gekennzeichnet, dass** sie einen Speicher und einen Prozessor umfasst, dass der Speicher und der Prozessor in Kommunikation miteinander verbunden sind, dass Computerbefehle in dem Speicher gespeichert sind, dass der Prozessor den Computerbefehl ausführt, wodurch ein Verfahren zum Unterteilen der hydrodynamischen Eigenschaften eines Reservoirs nach einem der Ansprüche 1-8 ausgeführt wird.

11. Computerlesbares Speichermedium, **dadurch gekennzeichnet, dass** Computerbefehle auf dem computerlesbaren Speichermedium gespeichert sind, dass der Computerbefehl verwendet wird, um zu ermöglichen, dass der Computer ein Verfahren zum Unterteilen der hydrodynamischen Eigenschaften eines Reservoirs nach einem der Ansprüche 1-8 ausführt.

S101

Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten

S102

Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten

S103

Bestimmen eines räumlichen Positionsbereichs jedes hydrodynamischen Merkmalsbereichs basierend auf räumlichen Positionsinformationen einer Vielzahl von Schnittebenen, die in jedem hydrodynamischen Merkmalsbereich enthalten sind

S104

Bestimmen eines Bereichstyps, der jedem hydrodynamischen Merkmalsbereich entspricht, basierend auf dem räumlichen Positionsbereich jedes hydrodynamischen Merkmalsbereichs

Figur 1

Figur 2

Figur 3

Figur 4

Figur 5

S601

Lesen der Wasserstandsdaten einer ersten Anzahl von Schnittebenen innerhalb des Reservoirbereichs des Reservoirs zu verschiedenen Zeitpunkten innerhalb eines spezifizierten Zeitintervalls unter den spezifizierten hydrologischen Bedingungen, um mehrere Sätze von Wasseroberflächenliniendaten entlang eines Fließweges zu erhalten

S602

Gruppieren einer ersten Anzahl von Schnittebenen basierend auf Wasserstandsdaten jeder Schnittebene zu verschiedenen Zeitpunkten innerhalb eines spezifizierten Zeitintervalls, um eine zweite Anzahl von hydrodynamischen Merkmalsbereichen zu erhalten

S603

Bestimmen eines räumlichen Positionsbereichs jedes hydrodynamischen Merkmalsbereichs basierend auf räumlichen Positionsinformationen einer Vielzahl von Schnittebenen, die in jedem hydrodynamischen Merkmalsbereich enthalten sind

S604

Bestimmen eines Bereichstyps, der jedem hydrodynamischen Merkmalsbereich entspricht, basierend auf dem räumlichen Positionsbereich jedes hydrodynamischen Merkmalsbereichs.

S605

Markieren jeder Schnittebene gemäß dem hydrodynamischen Merkmalsbereich, zu dem jede Schnittebene gehört

S606

Erhalten und Ausgeben einer Verteilungskarte des hydrodynamischen Merkmalsbereichs des Reservoirs basierend auf der räumlichen Positionsinformation jeder Schnittebene und der entsprechenden Markierung

Figur 6

Figur 7

Figur 8

Figur 9

Figur 10

```
┌─────────────────────────┐
│                         │   1101
│      Leseeinheit        │
│                         │
└─────────────────────────┘
            │
┌─────────────────────────┐
│                         │   1102
│   Gruppierungseinheit   │
│                         │
└─────────────────────────┘
            │
┌─────────────────────────┐
│  erste Bestimmungs-     │   1103
│  einheit                │
│                         │
└─────────────────────────┘
            │
┌─────────────────────────┐
│  zweite Bestimmungs-    │   1104
│  einheit                │
│                         │
└─────────────────────────┘
```

Figur 11

```
┌──────────────┐
│              │  1220
│   Speicher   │                    ┌──────────────────────┐
│              │                    │                      │  1230
└──────────────┘                    │  Eingabevorrichtung  │
       │                            │                      │
       │                            └──────────────────────┘
       │
───────┼──────────────────────────┐
       │                          │
┌──────────────┐                  │ ┌──────────────────────┐
│              │  1210            │ │                      │  1240
│  Prozessor   │                  │ │  Ausgabevorrichtung  │
│              │                  │ │                      │
└──────────────┘                  └─┴──────────────────────┘
```

Figur 12

Europäisches
Patentamt

European
Patent Office

Office européen
des brevets

# EUROPÄISCHER RECHERCHENBERICHT

**Nummer der Anmeldung**

EP 22 20 7143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHANG SHANGHONG ET AL: "The dynamic capacity calculation method and the flood control ability of the Three Gorges Reservoir", JOURNAL OF HYDROLOGY, Bd. 555, 1. Dezember 2017 (2017-12-01), Seiten 361-370, XP093050316, AMSTERDAM, NL ISSN: 0022-1694, DOI: 10.1016/j.jhydrol.2017.10.043 * das ganze Dokument * | 1-11 | INV. G06Q10/06 |
| A,P | ZENG SIDONG ET AL: "Evaluating the hydrological effects of the Three Gorges Reservoir based on a large-scale coupled hydrological-hydrodynamic-dam operation model", JOURNAL OF GEOGRAPHICAL SCIENCES, Bd. 33, Nr. 5, 1. Mai 2023 (2023-05-01), Seiten 999-1022, XP093050406, Heidelberg ISSN: 1009-637X, DOI: 10.1007/s11442-023-2117-7 Gefunden im Internet: URL:https://link.springer.com/content/pdf/ 10.1007/s11442-023-2117-7.pdf?pdf=button> * das ganze Dokument * | 1-11 | |
| A | ZHU SIPENG ET AL: "Water Balance Calculation Based on Hydrodynamics in Reservoir Operation", WATER 2022, Bd. 14, Nr. 13, 23. Juni 2022 (2022-06-23) , Seite 2001, XP093050331, DOI: 10.3390/w14132001 Gefunden im Internet: URL:https://doi.org/10.3390/w14132001> * das ganze Dokument * | 1-11 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 31. Mai 2023 | Weidmann, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)